# EUROPEAN PATENT APPLICATION

(11) **EP 4 582 322 A1**
(43) Date of publication of application: **09.07.2025**
(21) Application number: 22958207.7
(22) Date of filing: 06.09.2022
(51) Int. Cl.: B60W 40/02, B60W 40/08, B60W 50/14

(54) **VEHICLE DRIVER MONITORING DEVICE AND OPERATION METHOD THEREFOR**

(71) Applicant: LG Electronics Inc., Yeongdeungpo-gu Seoul 07336 (KR)
(72) Inventor: GOH, Minsoo, Seoul 06772 (KR); KONG, Kangkook, Seoul 06772 (KR)
(74) Representative: Vossius & Partner Patentanwälte Rechtsanwälte mbB
(86) International application number: PCT/KR2022/013306
(87) International publication number: WO 2024/053752

(57) **Abstract**

A vehicle driver monitoring device and an operation method therefor are disclosed. The driver monitoring device according to the present disclosure comprises: a first sensor mounted on the outside of a vehicle so as to monitor the surrounding environment of the vehicle; a second sensor mounted inside the vehicle so as to detect the face and the gaze direction of a driver who is driving; and a processor for monitoring gaze distraction of the driver with respect to a gaze region by using the second sensor, determining whether to change the gaze region according to a sensing result of the first sensor, and recognizing, according to the determination, the state of the driver corresponding to the amount of gaze distraction detected by means of the second sensor, wherein the processor adjusts the sensitivity of gaze distraction of the driver with respect to the gaze region on the basis of surrounding environment information acquired by means of the first sensor.

## Description

### Technical Field

The present disclosure relates to a driver monitoring apparatus for a vehicle and a method of operating the driver monitoring apparatus for a vehicle and, more particularly, to a driver monitoring apparatus for a vehicle, the apparatus being capable of monitoring a driver's state based on the extent of the driver's gaze dispersion partially occurring within an attention focus region during vehicle travel, and a method of operating the driver monitoring apparatus for a vehicle.

### Background Art

To enhance the safety and convenience of vehicle users, various sensors and apparatuses are provided in the vehicle to enable the vehicle's diverse functions. These vehicle functions may be categorized into convenience functions for enhancing driver convenience and safety functions for enhancing the safety of drivers and/or pedestrians.

Vehicle convenience functions refer to infotainment (information + entertainment) features and are designed to enhance driver convenience, such as supporting partial autonomous driving or improving visibility during night driving and in blind spots. Examples of these vehicle convenience functions include Active Cruise Control (ACC), a Smart Parking Assist System (SPAS), Night Vision (NV), a Head-Up Display (HUD), an Around View Monitor (AVM), an Adaptive Headlight System (AHS), and so forth.

Vehicle safety functions are technologies for ensuring the safety of drivers and/or pedestrians and include a lane departure warning system (LOWS), a lane keeping assist system (LKAS), an autonomous emergency braking (AEB) function, and so forth.

Technology for preventing a driver's drowsiness at the wheel, which is one of the vehicle safety functions, recognizes the driver's drowsiness state by analyzing the driver's captured image and accordingly outputs a warning to the driver. This technology has been commercialized.

Specifically, a Driver Monitoring System (DMS) is a safety system that detects the driver's drowsiness and gaze dispersion using a camera mounted on the vehicle's dashboard and outputs an alert, such as an audio alarm or a warning light, to help the driver focus attention on driving.

Notably, recently, Euro NCAP (E-NCAP) has made it mandatory for all new vehicles to be equipped with the DMS, effective from 2024 onward. The driver's gaze dispersion is a key factor in triggering an alarm, as required by Euro NCAP. For example, a determination reference for the driver's gaze dispersion, as required by Euro NCAP, is that gaze dispersion occurs for successive 3 seconds or accumulates to 10 seconds or more within a 30-second period while a vehicle travels at or above a speed of 10 km/h.

In addition, Korean Patent No. 1078466 discloses a technology that ascertains the driver's alertness state based on an analysis of the driver's eye-blinking pattern, or the like, which is obtained by capturing the image of the driver's face.

However, the determination reference for the driver's gaze dispersion depends on whether or not the driver focuses attention on the roadway ahead of the vehicle. Therefore, in many cases, a false alarm is triggered, or an alarm is frequently triggered even when the driver focuses attention on another region as needed (for example, when the driver focuses attention on a rearview mirror or a side mirror). This may increase the driver's fatigue and instead act as a factor that interferes with driving.

### Disclosure of Invention

### Technical Problem

Objects of the present disclosure include addressing the above-mentioned problems and other related problems.

One object of one or several embodiments of the present disclosure is to provide a driver monitoring apparatus for a vehicle, the apparatus being capable of providing a DMS alert without mistakenly identifying a driver's response to a surrounding situation of the vehicle as the driver's gaze dispersion during vehicle travel, and a method of operating the driver monitoring apparatus for a vehicle.

Another object of one or several embodiments of the present disclosure is to provide a driver monitoring apparatus for a vehicle, the apparatus being capable of providing a DMS alarm adaptively to an external situation, such as when attentive driving is necessary or when there is a likelihood of a collision, even if a vehicle maintains a sufficient distance from an object in a travel lane, and a method of operating the driver monitoring apparatus for a vehicle.

Another object of one or several embodiments of the present disclosure is to provide a driver monitoring apparatus for a vehicle, the apparatus being capable of providing a DMS alert more efficiently when a driver encounters an unavoidable external situation, such as changes in weather conditions or abrupt variations in luminous intensity, and a method of operating the driver monitoring apparatus for a vehicle.

Still another object of one or several embodiments of the present disclosure is to provide a driver monitoring apparatus for a vehicle, the apparatus being capable of performing more accurate DMS monitoring and alarming by monitoring the surrounding situations of a vehicle and predicting vehicle turns, changes in travel direction, travel mode, and similar factors before the vehicle begins moving, and a method of operating the driver monitoring apparatus for a vehicle.

### Solution to Problem

To accomplish the above-mentioned objects, a driver monitoring apparatus for a vehicle according to the present disclosure can adaptively adjust the sensitivity level for the driver's gaze dispersion partially occurring within an attention focus region based on surrounding environment information monitored by a camera on the front side of the exterior of the vehicle. Accordingly, it can be continuously monitored whether or not the driver focuses attention on the roadway ahead. Even when the driver's gaze direction is temporarily changed due to external situations, this cannot be falsely identified as the driver's gaze dispersion. Consequently, the occurrence of a DMS alarm or a DMS alarm error can be prevented.

According to one aspect of the present disclosure, there is provided a driver monitoring apparatus for a vehicle, the apparatus including: a reception unit that receives surrounding environment information from a first sensor mounted on the exterior of a vehicle, which monitors the surrounding environment of the vehicle; a second sensor mounted inside the vehicle, which detects a driver's face and gaze direction during vehicle travel, and a processor that monitors the driver's gaze dispersion partially occurring within an attention focus region using the second sensor, determines whether or not to change the attention focus region based on the sensing result from the first sensor, and recognizes the driver's state corresponding to the extent of the driver's gaze dispersion, which is detected by the second sensor, based on the determination. In the driver monitoring apparatus, the processor adjusts the sensitivity level for the driver's gaze dispersion partially occurring within the attention focus region on the basis of the surrounding environment information acquired by the first sensor and the sensing result from the second sensor.

In an embodiment, in the driver monitoring apparatus, the first sensor may be an ADAS camera mounted on the front side of the exterior of the vehicle, and the second sensor may be a DMS camera mounted on the front side of the interior of the vehicle.

In an embodiment, in the driver monitoring apparatus, the processor may change the sensitivity level for the driver's gaze dispersion based on the acquired surrounding environment information, and then, in response to the recognition that the cause of the change in the sensitivity level no longer exists, may restore the attention focus region and the sensitivity level for the driver's gaze dispersion to the initial values thereof, respectively.

In an embodiment, in the driver monitoring apparatus, the surrounding environment information acquired from the first sensor may indicate that a slowly travelling object is present beside the vehicle, and the processor may change the attention focus region in such a manner as to include a region associated with the direction in which the slowly traveling object is present and then monitor the driver's state.

In an embodiment, in the driver monitoring apparatus, while the slowly traveling object beside the vehicle is detected, the processor may reduce the sensitivity level for the driver's gaze dispersion to the changed attention focus region.

In an embodiment, in the driver monitoring apparatus, the surrounding environment information acquired from the first sensor may indicate that an object likely to cause a collision is present in the vicinity of the vehicle, and the processor may reduce the sensitivity level for the driver's gaze dispersion while the object likely to cause a collision is detected.

In an embodiment, in the driver monitoring apparatus, according to the result of an image acquired by the second sensor, the processor may monitor the driver's state based on the reduced sensitivity level for the driver's gaze dispersion while the driver's gaze direction aligns with the direction in which the object likely to cause a collision is present.

In an embodiment, in the driver monitoring apparatus, the processor may receive visible distance information as the surrounding environment information, the visible distance information being estimated on the basis of an image of the roadway ahead of the vehicle, which is acquired by the first sensor, and may adjust the sensitivity level for the driver's gaze dispersion based on the received visible distance information.

In an embodiment, in the driver monitoring apparatus, the processor may receive as the surrounding environment information the detection of a change in a tracking path of a lane in the travel direction of the vehicle, the change being acquired by the first sensor, and, when the turning of the vehicle is predicted based on the detection of the change in the tracking path, may reduce the sensitivity level for the driver's gaze dispersion.

In an embodiment, in the driver monitoring apparatus, the processor may add as the attention focus region a region associated with a direction corresponding to the detected change in the tracking path of the lane and may monitor the driver's gaze dispersion through the second sensor.

In an embodiment, in the driver monitoring apparatus, the region associated with the direction corresponding to the change in the tracking path may align with a gaze direction corresponding to the change in the tracking path, and the processor may expand the attention focus region toward the gaze direction corresponding to the change in the tracking path.

In an embodiment, in the driver monitoring apparatus, the processor may reduce the sensitivity level for the driver's gaze dispersion for a predetermined time based on the detection of a brightness change in an image acquired by the second sensor, the brightness change reaching or exceeding a reference value.

In an embodiment, in the driver monitoring apparatus, the processor may recognize the detection of a parking space by the first sensor as the surrounding environment information and, while the vehicle parks in the recognized parking space, may reduce the sensitivity level for the driver's gaze dispersion.

In an embodiment, in the driver monitoring apparatus, the processor may determine the parking direction of the vehicle based on data collected by the first sensor in the recognized parking space and may expand the attention focus region toward a gaze direction corresponding to the determined parking direction.

According to another aspect of the present disclosure, there is provided a method of operating a driver monitoring apparatus, the method including: a step of receiving surrounding environment information of a vehicle that travels, using a first sensor mounted on the exterior of the vehicle: a step of determining whether or not to change an attention focus region based on the received surrounding environment information and adjusting the sensitivity level of a driver's gaze dispersion partially occurring within the determined attention focus region; a step of monitoring the extent of the driver's gaze dispersion based on the adjusted sensitivity level for the driver's gaze dispersion partially occurring within the determined attention focus region using the second sensor mounted inside the vehicle; and a step of determining whether or not attentive driving is necessary depending on the driver's state corresponding to the monitoring of the extent of the driver's gaze dispersion and outputting an alert.

### Advantageous Effects of Invention

The effects of the driver monitoring apparatus for a vehicle according to the present disclosure and a method of operating the driver monitoring apparatus for a vehicle are described as follows.

According to one or several embodiments of the present disclosure, various surrounding situations of the vehicle that change in real time during vehicle travel are monitored, and an attention focus region or the sensitivity level of gaze dispersion for determining a driver's state is adjusted adaptively. Thus, the driver's gaze that shifts as needed during vehicle travel and the driver's gaze dispersion that occurs due to inattentiveness during vehicle travel can be distinguished. Accordingly, the driver's state can be ascertained more accurately, and thus the DMS alert can be provided without falsely identifying the driver's gaze dispersion.

According to one or several embodiments of the present disclosure, even in a case where the vehicle maintains a sufficient distance from an object in the travel lane and an attentiveness alarm is not triggered in the vehicle, for example, the movement of an object that travels beside a slow lane or is likely to cause a collision at a crossroad may be monitored. In such cases, the DMS can perform monitoring in a manner adaptive to an external situation by varying the attention focus region and/or adjusting the sensitivity level for the driver's gaze dispersion.

According to one or several embodiments of the present disclosure, in a case where the driver's visual distance is shortened due to weather conditions or the surrounding situation of the travel lane, in order to ensure safe driving, the sensitivity level for the driver's gaze dispersion can be raised for the purpose of adjustment. In an abrupt glaring situation, such as after exiting a long tunnel or when an oncoming vehicle's high beams are activated, the sensitivity level for the driver's gaze dispersion can be temporarily lowered for the purpose of adjustment. Accordingly, a DMS can perform smart monitoring while considering safe conditions and abrupt changes in situations.

According to one or several embodiments of the present disclosure, in a case where traveling situations are currently not changed and where changes in the traveling situations are sufficiently predicted by recognizing changes in nearby travel lanes, surrounding space, and similar factors, the DMS can perform monitoring by quickly adjusting the sensitivity level for the driver's gaze dispersion or expanding the attention focus region. Accordingly, the need for frequent warnings to the driver can be eliminated, reducing inconvenience.

### Brief Description of Drawings

FIG. 1 is a view illustrating an example of a vehicle according to an embodiment of the present disclosure.
FIG. 2 is a set of views illustrating the vehicle according to the embodiment of the present disclosure, when viewed from various angles.
FIGS. 3 and 4 are views each illustrating the interior of the vehicle according to the embodiment of the present disclosure.
FIGS. 5 and 6 are views that are referenced to describe various objects associated with the travel of the vehicle according to the embodiment of the present disclosure.
FIG. 7 is a block diagram that is referenced to describe the vehicle according to the embodiment of the present disclosure.
FIG. 8 is a block diagram illustrating an exemplary configuration of the driver monitoring apparatus according to an embodiment of the present disclosure.
FIGS. 9, 10, 11, and 12 are views illustrating various examples, respectively, where an attention focus region, which serves as a reference for monitoring a driver's state, is changed based on the operation of the driver monitoring apparatus according to the embodiment of the present disclosure.
FIGS. 13A and 13B are exemplary views, each illustrating the expansion of the attention focus region in a case where the vehicle travels beside a slow lane, using the driver monitoring apparatus according to the embodiment of the present disclosure.
FIGS. 14A and 14B are exemplary views, each illustrating the adjustment of the sensitivity level for the driver's gaze dispersion when an object likely to cause a collision is present in the vicinity of the vehicle, using the driver monitoring apparatus according to the embodiment of the present disclosure.
FIGS. 15A and 15B are exemplary views, respectively, that are referenced to describe the application of the driver's gaze dispersion in a manner that varies with a change in visual distance, using the driver monitoring apparatus according to the embodiment of the present disclosure.
FIG. 16 is a set of views that is referenced to describe a change in the attention focus region in a case where the vehicle is expected to turn, using the driver monitoring apparatus according to the embodiment of the present disclosure.
FIG. 17 is a flowchart illustrating the adjustment of the sensitivity level for the driver's gaze dispersion based on a change in the brightness of a DMS image, using the driver monitoring apparatus according to the embodiment of the present disclosure.
FIG. 18 is a view illustrating the adjustment of the sensitivity level for the driver's gaze dispersion in parking mode when parting the vehicle, using the driver monitoring apparatus according to the embodiment of the present disclosure.

### Mode for the Invention

Embodiments disclosed in the present specification will be described in detail below with reference to the accompanying drawings, and regardless of figure numbers, the same or similar constituent elements are given the same reference number, and descriptions thereof are not repeated. The terms 'module' and 'unit' are hereinafter interchangeably or individually used to refer to a constituent element only for convenience in description in the present specification and therefore are not themselves intended to take on different meanings or to depict different functions. In addition, when describing the embodiments disclosed in the present specification, a detailed description of a related well-known technology will be omitted if it is determined that it would obscure the nature and gist of the present disclosure. In addition, when describing the embodiments disclosed in the present specification, a detailed description of a related well-known technology will be omitted if it is determined that it would obscure the nature and gist of the present disclosure. In addition, the accompanying drawings are provided only to help easily understand the embodiments disclosed in the present specification. It should be understood that the technical idea disclosed in the present specification is not limited by the accompanying drawings. Furthermore, it should be understood that any alteration or equivalent of, or any substitute for, a constituent element according to an embodiment of the present disclosure, which falls within the scope of the technical idea of the present disclosure, is included within the scope of the present disclosure.

The ordinal numbers first, second, and so forth may be used to describe various elements, but they do not limit these elements. These ordinal numbers are only used to distinguish one element from another.

It should be understood that a constituent element, when referred to as 'connected to' or 'have access to' a different constituent element, may be directly connected to or have direct access to the different constituent element or may be connected to or have access to the different constituent element, with a third constituent element in between. Likewise, it should be understood that a constituent element, when referred to as 'directly connected to' or 'have direct access to' a different constituent element, may be connected to or have access to the different constituent element without a third constituent element in between.

A noun in singular form, unless it has a different meaning in context, has the same meaning as when used in its plural form.

The terms 'include,' 'have,' and the like, which are used in the present application, should be understood as indicating the presence of a feature, number, step, operation, constituent element, component, or combination thereof, without precluding the possibility of the presence or addition of one or more features, numbers, steps, operations, constituent constituents, components, or combinations thereof.

Examples of a vehicle described in the present specification may conceptually include automobiles and motorcycles. The vehicle will be described below with a focus placed on the automobile.

Examples of the vehicle described in the present specification may conceptually include all vehicles, such as internal combustion engine vehicles having an engine as a power source, hybrid vehicles having an engine and an electric motor as power sources, and electric vehicles having an electric motor as a power source.

In the following description, the left side of the vehicle refers to the left side in the travel direction of the vehicle, and the right side of the vehicle refers to the right side in the travel direction.

"Travel information of the vehicle" disclosed in the present specification includes vehicle travel operation data and travel environment data.

At this point, the traveling operation data may include various types of data collected in a vehicle during vehicle travel, such as vehicle speed, steering angle control, brake operation, gear operation, accumulated travel time, vehicle location, the operation of a vehicular infotainment system, and the operation of an apparatus associated with safety functions. In addition, the travel environment data may include traffic information, such as road geometry information of the vehicle's travel road, traffic volume along the travel road, and traveling speed, and surrounding environment data, such as weather information, ambient sound around the vehicle, and ambient light.

In addition, an "attention focus region" or a "travel-related attention focus region" that is disclosed in the present specification may refer to a region where a driver' gaze remains during vehicle travel or to a region where the driver's gaze is required to remain to ensure safe driving. Throughout the present disclosure, the "attention focus region" or the "travel-related attention focus region" may mostly refer to a gaze region that is monitored to ascertain the driver's state. In this case, for example, the extent of the driver's gaze dispersion may be ascertained by monitoring whether or not the driver's gaze direction falls within the "attention focus region" or the "travel-related attention focus region."

In addition, the determination of the "driver's state" disclosed in the present specification may refer to the determination of one or more of the following: a driver's alert state (the extent of alertness), an expected drowsiness state, or a driving inattentiveness state. The "driver's state" may be determined continuously, cumulatively, and in real time during vehicle travel.

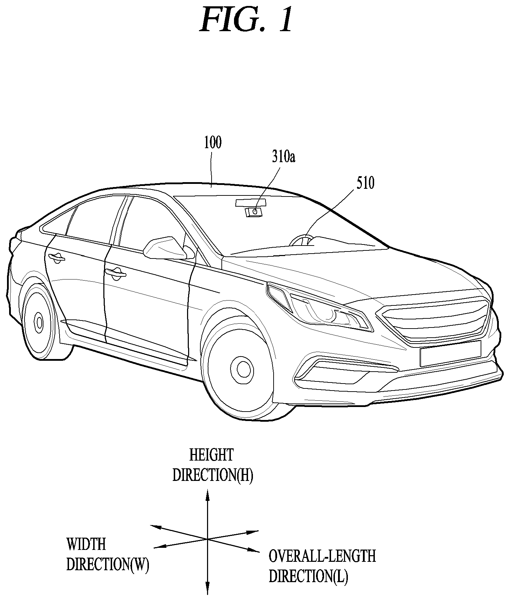

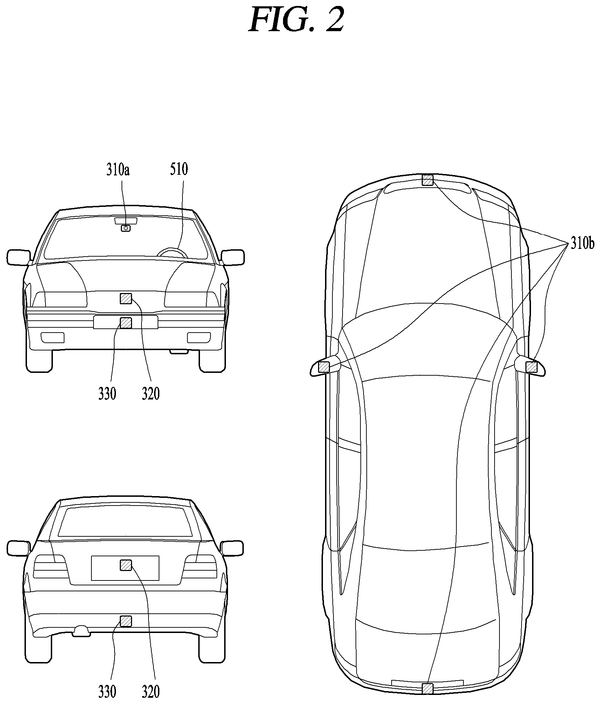

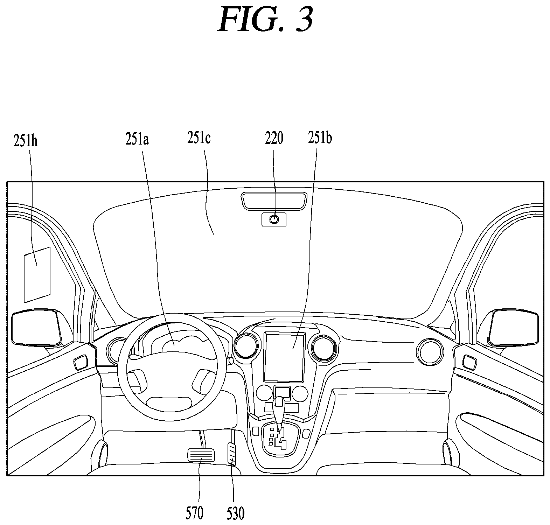

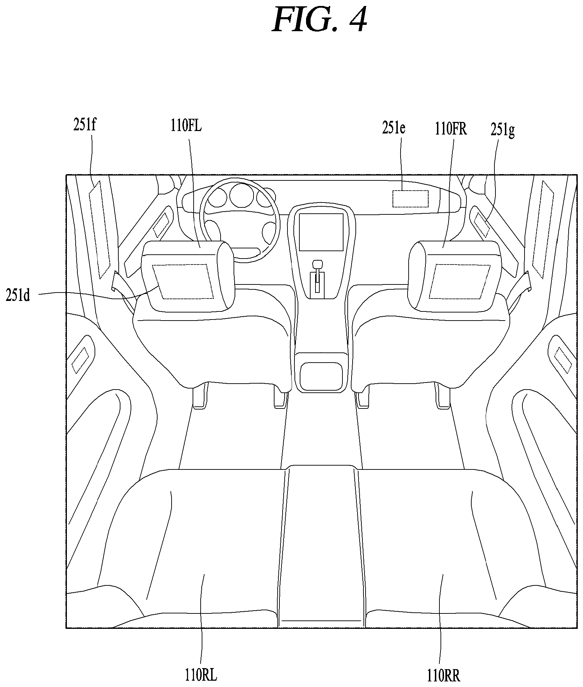

FIGS. 1 and 2 are views each illustrating the exterior of a vehicle according to an embodiment of the present disclosure. FIGS. 3 and 4 are views each illustrating the interior of the vehicle according to the embodiment of the present disclosure.

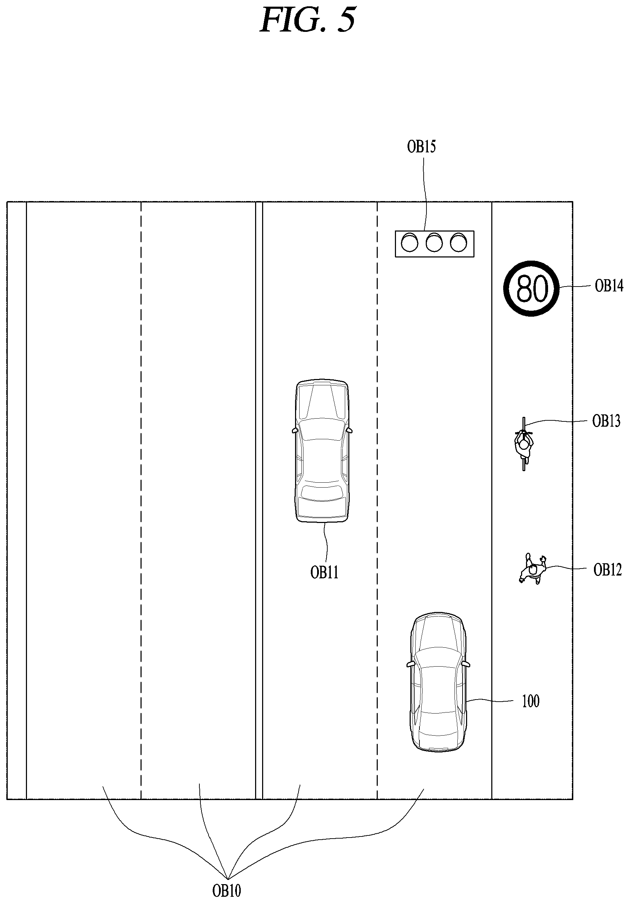

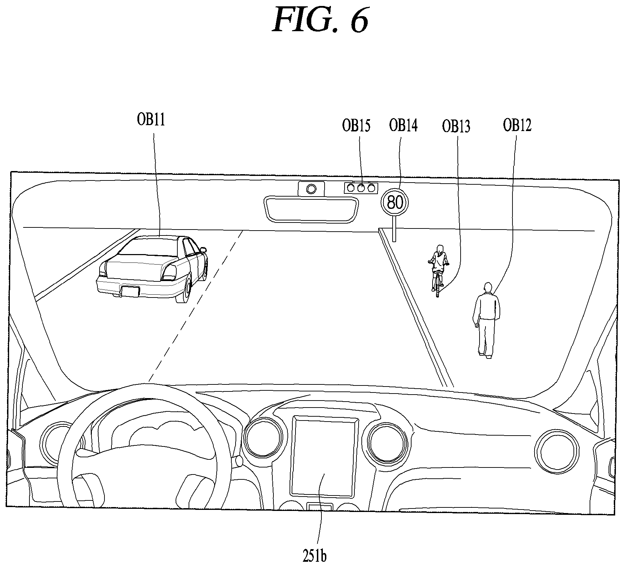

FIGS. 5 and 6 are views each illustrating various objects associated with the travel of the vehicle according to the embodiment of the present disclosure.

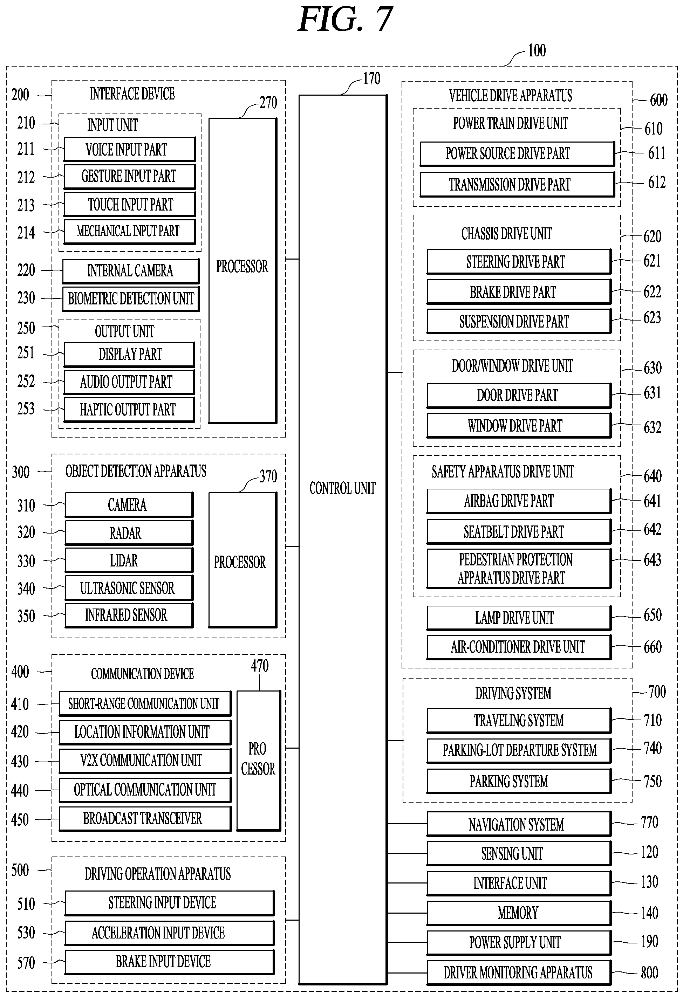

FIG. 7 is a block diagram that is referenced to describe the vehicle according to the embodiment of the present disclosure. FIG. 7 is a block diagram that is referenced to describe the vehicle according to the embodiment of the present disclosure.

With reference to FIGS. 1 to 7, a vehicle 100 may include wheels that rotate by a power source and a steering input device 510 for adjusting the driving direction of the vehicle 100.

The vehicle 100 may be an autonomous traveling vehicle. The vehicle 100 may switch to an autonomous traveling mode or a manual mode on the basis of user input. For example, the vehicle 100 may switch from the manual mode to the autonomous traveling mode or from the autonomous traveling mode to the manual mode on the basis of user input through a user interface device 200 (hereinafter referred to as a 'user terminal')

The vehicle 100 may switch to the autonomous traveling mode or the manual mode on the basis of the traveling situation information. The traveling situation information may be generated on the basis of object information provided by an object detection apparatus 300. For example, the vehicle 100 may switch from the manual mode to the autonomous traveling mode or from the autonomous traveling mode to the manual mode on the basis of the traveling situation information generated by the object detection apparatus 300. For example, the vehicle 100 may switch from the manual mode to the autonomous traveling mode or from the autonomous traveling mode to the manual mode on the basis of the traveling situation information through a communication device 400.

The vehicle 100 may switch from the manual mode into the autonomous traveling mode or from the autonomous traveling mode to the manual mode on the basis of information, data, signals, all of which are provided by an external device.

In a case where the vehicle 100 may be driven in the autonomous traveling mode, the vehicle 100 may be driven through the use of a driving system 700. For example, the vehicle 100 may be driven on the basis of information, data, and signals, all of which are generated by a traveling system 710, a parking-lot departure system 740, and a parking system 750.

When the vehicle 100 is driven in the manual mode, the vehicle 100 may receive the user input for driving through a driving operation apparatus 500. The vehicle 100 may be driven on the basis of the user input received through the driving operation apparatus 500.

The overall length refers to the length from the front end to the rear end of the vehicle 100, the width refers to the width of the vehicle 100, and the height refers to the length from the bottom of the wheel to the roof. In the following description, an overall-length direction L may refer to a direction which serves as a reference for measuring the overall length of the vehicle 100, a width direction W may refer to a direction that serves as a reference for measuring the width of the vehicle 100, and a height direction H may refer to a direction that serves as a reference for measuring the height of the vehicle 100.

As illustrated in FIG. 7, the vehicle 100 may include the user interface device (hereinafter referred to as the 'user terminal') 200, the object detection apparatus 300, the communication device 400, the driving operation apparatus 500, a vehicle drive apparatus 600, a driving system 700, a navigation system 770, a sensing unit 120, a vehicular interface unit 130, a memory 140, a control unit 170 and a power supply unit 190.

According to an embodiment, the vehicle 100 may further include one or more constituent elements in addition to constituent elements described in the present specification or may omit one or more of the described constituent elements.

The user interface device 200 is a device for communication between the vehicle 100 and the user. The user interface device 200 may receive the user input and may provide generated by the vehicle 100 to the user. The vehicle 100 may implement a user interface (UI) or user experience (UX) through the user interface device (hereinafter referred to as the 'user terminal') 200.

The user interface device 200 may include an input unit 210, an internal camera 220, a biometric detection unit 230, an output unit 250, and a processor 270. According to an embodiment, the user interface device 200 may further include one or more constituent elements in addition to constituent elements described in the present specification or may omit one or more of the described constituent elements.

The input unit 210 serves to receive information, as input, from the user. Data collected in the input unit 210 may be analyzed by the processor 270 and processed into a user's control command.

The input unit 210 may be arranged inside the vehicle 100. For example, the input unit 210 may be arranged on one region of the steering wheel, one region of the instrument panel, one region of the seat, one region of each pillar, one region of the door, one region of the center console, one region of the headlining, one region of the sun visor, one region of the windshield, one region of the window, or one region of a similar location.

The input unit 210 may include a voice input part 211, a gesture input part 212, a touch input part 213, and a mechanical input part 214.

The voice input part 211 may convert a user's voice input into an electric signal. The electric signal, resulting from the conversion, may be provided to the processor 270 or the control unit 170. The voice input part 211 may include at least one microphone.

The gesture input part 212 may convert a user's gesture input into an electric signal. The electric signal, resulting from the conversion, may be provided to the processor 270 or the control unit 170.

The gesture input part 212 may include at least one of the following: an infrared sensor or an image sensor, each of which is for detecting the user's gesture input. According to an embodiment, the gesture input part 212 may detect a user's three-dimensional (3D) gesture input. To this end, the gesture input part 212 may include a light-emitting diode, which emits a plurality of infrared rays, or a plurality of image sensors.

The gesture input part 212 may detect the user's 3D gesture input through a time of flight (TOF) method, a structured light method, or a disparity method.

The touch input part 213 may convert the user's touch input into an electric signal. The electric signal, resulting from the conversion, may be provided to the processor 270 or the control unit 170.

The touch input part 213 may include a touch sensor for detecting the user's touch input. According to an embodiment, the touch input part 213 may be integrally formed with a display part 251, thereby implementing a touch screen. This touch screen may provide both an input interface and an output interface between the vehicle 100 and the user.

The mechanical input part 214 may include at least one of the following: a button, a dome switch, a jog wheel, or a jog switch. An electric signal generated by the mechanical input part 214 may be provided to the processor 270 or the control unit 170. The mechanical input part 214 may be arranged on a steering wheel, a center fascia, a center console, a cockpit module, a door, and the like.

The internal camera 220 may acquire an image of the interior of the vehicle 100. The processor 270 may detect a user's state on the basis of the image of the interior of the vehicle 100. The processor 270 may acquire the user's gaze information from the image of the interior of the vehicle 100. The processor 270 may detect the user's gesture from the image of the interior of the vehicle 100.

The biometric detection unit 230 may acquire the user's biometric information. The biometric detection unit 230 may include a sensor for acquiring the user's biometric information and may acquire the user's fingerprint information, heart rate information, and the like using the sensor. The biometric information may be used for user authentication.

The output unit 250 may generate an output associated with sight, hearing, or touch. The output unit 250 may include at least one of the following: the display part 251, an audio output part 252, or a haptic output part 253.

The display part 251 may output graphic objects corresponding to various types of information. The display part 251 may include at least one of the following: a liquid crystal display (LCD), a thin film transistor-LCD (TFT LCD), an organic light-emitting diode (OLED), a flexible display, a three-dimensional (3D) display, or an e-ink display.

The display part 251 may be inter-layered with, or integrally formed with, the touch input part 213, thereby implementing a touch screen.

The display part 251 may be implemented as a Head-Up Display (HUD). In a case where the display part 251 may be implemented as the HUD, the display part 251 may be equipped with a projection module and thus may output information through an image that is projected onto a window shield or a window.

An example of the display part 251 may be a transparent display. The transparent display may be attached to the windshield or the window. The transparent display may have a predetermined degree of transparency and may output a predetermined screen thereon. The transparent display may include at least one of the following: a thin film electroluminescent (TFEL), a transparent organic light-emitting diode (OLED), a transparent liquid crystal display (LCD), a transmissive transparent display, or a transparent light-emitting diode (LED) display. The transparent display may have adjustable transparency.

The user interface device 200 may include a plurality of display parts, for example, display parts 251a to 251g.

The display part 251 may be arranged on one region of the steering wheel, one region 521a, 251b, or 251e of the instrument panel, one region 251d of the seat, one region 251f of each pillar, one region 251g of the door, one region of the center console, one region of the headlining, or one region of the sun visor, or may be implemented on one region 251c of the windshield, or one region of the window.

The audio output part 252 converts an electric signal provided from the processor 270 or the control unit 170 into an audio signal and outputs the audio signal. To this end, the audio output part 252 may include at least one speaker.

The haptic output part 253 generates a tactile output. For example, the haptic output part 253 may operate to vibrate the steering wheel, the safety belt, and the seats 110FL, 110FR, 110RL, and 110RR, thereby enabling the user to recognize the vibration output.

The processor (hereinafter referred to as the 'control unit') 270 may control the overall operation of each unit of the user interface device 200. According to an embodiment, the user interface device 200 may include a plurality of processors 270 or may not include any processor 270.

In a case where the processor 270 is not included in the user interface device 200, the user interface device 200 may operate under the control of a processor of another apparatus within the vehicle 100 or under the control of the control unit 170.

The user interface device 200 may be referred to as a vehicular display apparatus. The user interface device 200 may operate under the control of the control unit 170.

The object detection apparatus 300 is an apparatus for detecting an object positioned (or located) outside the vehicle 100. Examples of the object may include a variety of things associated with the driving of the vehicle 100. With reference to FIGS. 5 and 6, examples of an object O may include a traffic lane OB10, a different vehicle OB11, a pedestrian OB12, a two-wheeled vehicle OB13, traffic signals OB14 and OB15, ambient light, a road, a structure, a speed bump, a terrain feature, an animal, and the like.

The lane OB10 may be a travel lane, a lane adjacent to the travel lane, or a lane along which another vehicle in the opposite direction travels. The lane OB10 may conceptually include the left and right boundary lines forming a lane.

The different vehicle OB11 may be a vehicle which travels in the vicinity of the vehicle 100. The different vehicle OB11 may be a vehicle positioned within a predetermined distance from the vehicle 100. For example, the different vehicle OB11 may be a vehicle which travels ahead of or behind the vehicle 100.

The pedestrian OB12 may be a person located in the vicinity of the vehicle 100. The pedestrian OB12 may be a person located within a predetermined distance from the vehicle 100. For example, the pedestrian OB12 may be a person located on a sidewalk or roadway.

The two-wheeled vehicle OB12 may be a person-carrying vehicle that is positioned in the vicinity of the vehicle 100 and moves on two wheels. The two-wheeled vehicle OB12 may be a person-carrying vehicle that is positioned within a predetermined distance from the vehicle 100 and has two wheels. For example, the two-wheeled vehicle OB13 may be a motorcycle or a bicycle that is positioned on a sidewalk or roadway.

Examples of the traffic signal may include a traffic light OB15, a traffic sign OB14, and a pattern or text drawn on a road surface.

The ambient light may be light generated from a lamp provided on another vehicle. The ambient light may be light generated from a street lamp. The ambient light may be solar light.

Examples of road features may include surfaces, curves, upward slopes, downward slopes, and the like.

The structure may be an object that is located in the vicinity of a road and fixed on the ground. Examples of the structure may include a street lamp, a roadside tree, a building, an electric pole, a traffic light, a bridge, and the like.

Examples of the terrain feature may include a mountain, a hill, and the like.

Objects may be categorized into moving objects and stationary objects. Examples of the moving object may conceptually include another vehicle and a pedestrian. Examples of the stationary object may include a traffic signal, a road, and a structure.

The object detection apparatus 300 may include a camera 310, a radar 320, a LiDAR 330, an ultrasonic sensor 340, an infrared sensor 350, and a processor 370.

According to an embodiment, the object detection apparatus 300 may further include one or more constituent elements in addition to constituent elements described in the present specification or may omit one or more of the described constituent elements.

The camera 310 may be positioned in an appropriate portion of the exterior of the vehicle to acquire an image of the surroundings of the vehicle 100. The camera 310 may be a mono camera, a stereo camera 310a, an Around View Monitoring (AVM) camera 310b, or a 360-degree camera.

For example, the camera 310 may be arranged adjacent to a front windshield within the vehicle 100 to acquire an image of the surroundings in front of the vehicle 100. Alternatively, the camera 310 may be arranged in the vicinity of the front bumper or the radiator grill.

For example, the camera 310 may be arranged adjacent to a rear glass pane within the vehicle 100 to acquire an image of the surroundings behind the vehicle100. Alternatively, the camera 310 may be arranged adjacent to the rear bumper, the trunk, or the tailgate.

For example, the camera 310 may be arranged adjacent to at least one of the side windows within the vehicle 100 to acquire an image of the surroundings alongside the vehicle 100. Alternatively, the camera 310 may be arranged in the vicinity of the side mirror, the fender, or the door.

The camera 310 may provide an acquired image to the processor 370.

The radar 320 may include an electromagnetic wave transmission unit and an electromagnetic wave reception unit. The radar 320 may be implemented in compliance with a pulse radar scheme or a continuous wave radar scheme according to the principle of emitting a radio wave. The radar 320 may be implemented in compliance with a Frequency Modulated Continuous Wave (FMCW) scheme or a Frequency Shift Keying (FSK) scheme, each of which is among continuous wave radar schemes, according to a signal waveform.

The radar 320 may detect an object using a time of flight (TOF) technique or a phase-shift technique, with an electromagnetic wave as a medium, and may detect the location of the detected object, the distance to the detected object, and the relative speed with respect to the detected object.

The radar 320 may be arranged in an appropriate position on the exterior of the vehicle 100 to detect an object that is positioned in front of, behind, or alongside the vehicle 100.

The LiDAR 330 may include a laser transmission unit and a laser reception unit. The LiDAR 330 may be implemented using a time of flight (TOF) technique or a phase-shift technique.

The LiDAR 330 may be implemented as a drive-type or non-drive-type LiDAR.

In a case where the LiDAR 330 may be implemented as a drive-type LiDAR, the LiDAR 330 may be rotated by a motor and may detect an object in the vicinity of the vehicle 100.

In a case where the LiDAR 330 is implemented as a non-drive-type LiDAR, the LiDAR 330 may detect, through light steering, an object positioned (or located) within a predetermined range of the vehicle 100. The vehicle 100 may include a plurality of non-drive-type LiDARs 330.

The LiDAR 330 may detect an object using a time of flight (TOF) technique or a phase-shift technique, with laser light as a medium, and may detect the location of the detected object, the distance to the detected object, and the relative speed with respect to the detected object.

The radar 330 may be arranged in an appropriate position on the exterior of the vehicle 100 to detect an object that is positioned in front of, behind, or alongside the vehicle 100.

The ultrasonic sensor 340 may include an ultrasonic wave transmission unit and an ultrasonic wave reception unit. The ultrasonic sensor 340 may detect an object using an ultrasonic wave and may detect the position of the detected object, the distance to the detected object, and the relative speed with respect to the detected object.

The ultrasonic sensor 340 may be arranged in an appropriate position on the exterior of the vehicle 100 to detect an object positioned (or located) in front of, behind, or alongside the vehicle 100.

The infrared sensor 350 may include an infrared ray transmission unit and an infrared ray reception unit. The infrared sensor 340 may detect an object on the basis of infrared light and may detect the location of the detected object, the distance from the detected object, and the relative speed with the detected object.

The infrared sensor 350 may be arranged in an appropriate position on the exterior of the vehicle 100 to detect an object positioned (located) in front of, behind, or alongside the vehicle 100.

The processor 370 may control the overall operation of each unit of the object detection apparatus 300.

The processor 370 may detect an object on the basis of an acquired image and may track the object. The processor 370 may perform operations, such as calculating the distance to an object and calculating the relative speed with respect to the object, through an image processing algorithm.

The processor 370 may detect an object on the basis of a reflected electromagnetic wave, resulting from an emitted electromagnetic wave being reflected off the object, and may track the object. The processor 370 may perform operations, such as calculating the distance to an object and calculating the relative speed with respect to the object, on the basis of the electromagnetic wave.

The processor 370 may detect an object on the basis of a reflected laser beam, resulting from an emitted laser being reflected off the object, and may track the object. The processor 370 may perform operations, such as calculating the distance to an object and calculating the relative speed with respect to the object, on the basis of the laser beam.

The processor 370 may detect an object on the basis of a reflected ultrasonic wave, resulting from an emitted ultrasonic wave being reflected off the object, and may track the object. The processor 370 may perform operations, such as calculating the distance to an object and calculating the relative speed with respect to the object, on the basis of the ultrasonic wave.

The processor 370 may detect an object on the basis of reflected infrared light, resulting from emitted infrared light being reflected off the object, and may track the object. The processor 370 may perform operations, such as calculating the distance to an object and calculating the relative speed with respect to the object, on the basis of the infrared light.

According to an embodiment, the object detection apparatus 300 may include a plurality of processors 370 or may not include any processor 370. For example, each of the following: the camera 310, the radar 320, the LiDAR 330, the ultrasonic sensor 340, and the infrared sensor 350 may include its processor individually.

In a case where the processor 370 is not included in the object detection apparatus 300, the object detection apparatus 300 may operate under the control of a processor of an apparatus within the vehicle 100 or under the control of the control unit 170.

The object detection device 400 may operate under the control of the control unit 170.

The communication device 400 is a device for performing communication with an external device. The external device here may be another vehicle, a mobile terminal, or a server.

To perform communication, the communication device 400 may include a transmission antenna, a reception antenna, and at least one of the following: a radio frequency (RF) circuit or an RF device, each of which is capable of implementing various communication protocols.

The communication device 400 may include a short-range communication unit 410, a location information unit 420, a V2X communication unit 430, an optical communication unit 440, a broadcast transceiver 450, and a processor 470.

According to an embodiment, the communication device 400 may further include one or more constituent elements in addition to constituent elements in the present specification or may omit one or more of the described constituent elements.

The short-range communication unit 410 is a unit for short-range communication. The short-range communication unit 410 may support short-range communication using at least one of the following technologies: Bluetooth^{™}, Radio Frequency IDentification (RFID), Infrared Data Association (IrDA), Ultra-Wide Band (UWB), Zig Bee, Near Field Communication (NFC), Wireless-Fidelity (Wi-Fi), Wi-Fi Direct, or Wireless Universal Serial Bus (USB).

The short-range communication unit 410 may form short-range wireless area networks and may perform short-range communication between the vehicle 100 and at least one external device.

The location information unit 420 is a unit for acquiring location information of the vehicle 100. For example, the location information unit 420 may include a Global Positioning System (GPS) module or a Differential Global Positioning System (DGPS) module.

The V2X communication unit 430 is a unit for performing wireless communications with a server (Vehicle to Infrastructure, V2I), another vehicle (Vehicle to Vehicle, V2V), or a pedestrian (Vehicle to Pedestrian, V2P). The V2X communication unit 430 may include an RF circuit capable of implementing protocols for communication with infrastructure (V2I), communication between vehicles (V2V), and communication with a pedestrian (V2P).

The optical communication unit 440 is a unit for performing communication with an external device, with light as a medium. The optical communication unit 440 may include an optical transmission part for converting an electric signal into an optical signal and externally transmitting the optical signal, and an optical reception part for converting the received optical signal back into an electric signal.

According to an embodiment, the optical transmission part may be formed integrally with a lamp provided on the vehicle 100.

The broadcast transceiver 450 is a unit for receiving a broadcast signal from an external broadcast management server or transmitting a broadcast signal to the broadcast managing server over a broadcast channel. The broadcast channel may include a satellite channel, a terrestrial channel, or both. The broadcast signal may include a TV broadcast signal, a radio broadcast signal, and a data broadcast signal.

The processor 470 may control the overall operation of each unit of the communication device 400.

According to an embodiment, the communication device 400 may include a plurality of processors 470 or may not include any processor 470.

In a case where the processor 470 is not included in the communication device 400, the communication device 400 may operate under the control of a processor of another device within the vehicle 100 or under the control of the control unit 170.

The communication device 400, along with the user interface device 200, may implement a vehicular display device. In this case, the vehicular display device may be referred to as a telematics device or an Audio Video Navigation (AVN) device.

The communication device 400 may operate under the control of the control unit 170.

The driving operation apparatus 500 is an apparatus for receiving user input for driving.

In the manual mode, the vehicle 100 may be driven on the basis of a signal provided by the driving operation apparatus 500.

The driving operation apparatus 500 may include the steering input device 510, an acceleration input device 530, and a brake input device 570.

The steering input device 510 may receive an input regarding the driving direction of the vehicle 100 from the user. The steering input device 510 is preferably configured in the form of a wheel, allowing a steering input by the wheel's rotation. According to an embodiment, the steering input apparatus may also be configured in the shape of a touch screen, a touchpad, or a button.

The acceleration input apparatus 530 may receive an input for accelerating the vehicle 100 from the user. The brake input apparatus 570 may receive an input for decelerating the vehicle 100 from the user. The acceleration input apparatus 530 and the brake input apparatus 570 are preferably configured in the shape of a pedal. According to an embodiment, the acceleration input apparatus or the brake input apparatus may also be configured in the shape of a touch screen, a touchpad, or a button.

The driving operation apparatus 500 may operate under the control of the control unit 170.

The vehicle drive apparatus 600 is an apparatus that electrically controls driving of the various apparatuses within the vehicle 100.

The vehicle drive apparatus 600 may include a power train drive unit 610, a chassis drive unit 620, a door/window drive unit 630, a safety apparatus drive unit 640, a lamp drive unit 650, and an air-conditioner drive unit 660.

According to an embodiment, the vehicle drive apparatus 600 may further include one or more constituent elements in addition to constituent elements in the present specification or may omit one or more of the described constituent elements.

The vehicle drive apparatus 600 may include a processor. Each unit of the vehicle drive apparatus 600 may individually include its processor.

The power train drive unit 610 may control the operation of a power train apparatus.

The power train drive unit 610 may include a power source drive part 611 and a transmission drive part 612.

The power source drive part 611 may execute control on the power source of the vehicle 100.

For example, in a case where the power source of the vehicle 100 is a fossil fuel-based engine, the power source drive part 611 may execute electronic control on the engine. Accordingly, the output torque and other parameters of the engine may be controlled. The power source drive part 611 may adjust the engine output torque under the control of the control unit 170.

For example, in a case where the power source of the vehicle 100 is an electric energy-based motor, the power source drive part 611 may execute control on the motor. The power source drive part 611 may adjust a rotational speed, torque, and other parameters of the motor under the control of the control unit 170.

The transmission drive part 612 may execute control on a transmission. The transmission drive gearbox part 612 may adjust the state of the transmission. The transmission drive part 612 may change the state of the transmission to Drive (D), Reverse (R), Neutral (N), or Park (P).

In a case where the power source of the vehicle 100 is an engine, the transmission drive part 612 may adjust the engaged state of a gear in Drive (D).

The chassis drive unit 620 may control the operation of a chassis apparatus. The chassis drive unit 620 may include a steering drive part 621, a brake drive part 622, and a suspension drive part 623.

The steering drive part 621 may execute electronic control on a steering apparatus within the vehicle 100. The steering drive part 621 may change the driving direction of the vehicle 100.

The brake drive part 622 may execute electronic control on a brake apparatus within the vehicle 100. For example, the brake drive part 622 may reduce the speed of the vehicle 100 by controlling the operation of the brakes provided on the wheels.

The brake drive part 622 may individually control each of the brakes. The brake drive part 622 may control braking forces applied to the wheels so that they differ from one another.

The suspension drive part 623 may execute electronic control on a suspension apparatus within the vehicle 100. For example, in a case where a road surface is uneven, the suspension drive part 623 may reduce vibration of the vehicle 100 by controlling the suspension apparatus. The suspension drive part 623 may individually control each of the plurality of suspensions.

The door/window drive unit 630 may execute electronic control on a door apparatus or a window apparatus within the vehicle 100.

The door/window drive unit 630 may include a door drive part 631 and a window drive part 632.

The door drive part 631 may execute control on the door apparatus. The door drive part 631 may control the opening or closing of the plurality of doors included in the vehicle 100. The door drive part 631 may control the opening or closing of the trunk or the tailgate. The door drive part 631 may control the opening or closing of the sunroof.

The window drive part 632 may execute electronic control on the window apparatus. The window drive part 632 may control the opening or closing of the plurality of windows included in the vehicle 100.

The safety apparatus drive unit 640 may execute electronic control on the various safety apparatuses within the vehicle 100.

The safety apparatus drive unit 640 may include an airbag drive part 641, a seatbelt drive part 642, and a pedestrian protection apparatus drive part 643.

The airbag drive part 641 may execute electronic control on the airbag apparatus within the vehicle 100. For example, when a risk is detected, the airbag drive part 641 may control the airbag to deploy.

The seatbelt drive part 642 may execute electronic control on the seatbelt apparatus within the vehicle 100. For example, when a risk is detected, the seatbelt drive part 642 may secure the occupants in seats 110FL, 110FR, 110RL, and 110RR by tightening seatbelts.

The pedestrian protection apparatus drive part 643 may execute electronic control on the hood lift and the pedestrian airbag. For example, when a collision with a pedestrian is detected, the pedestrian protection apparatus drive part 643 may control the hood lift and the pedestrian airbag to deploy.

The lamp drive part 650 may execute electronic control on the various lamp apparatuses within the vehicle 100.

The air-conditioner drive unit 660 may execute electronic control on the air conditioner within the vehicle 100. For example, when the temperature inside the vehicle 100 is high, the air-conditioner drive unit 660 may control the air conditioner to operate in such a manner as to supply cool air into the vehicle 100.

The vehicle drive apparatus 600 may include a processor. Each unit of the vehicle drive apparatus 600 may individually include its processor.

The vehicle drive apparatus 600 may operate under the control of the control unit 170.

The driving system 700 is a system that controls various driving functions of the vehicle 100. The driving system 700 may operate in the autonomous traveling mode.

The driving system 700 may include the traveling system 710, the parking-lot departure system 740, and the parking system 750.

According to an embodiment, the driving system 700 may further include one or more constituent elements in addition to constituent elements described in the present disclosure or may emit one or more of the described constituent elements.

The driving system 700 may include a processor. Each unit of the driving system 700 may individually include its processor.

According to an embodiment, in a case where the driving system 700 may be implemented in software, the driving system 700 may also conceptually operate at a lower level than the control unit 170.

According to an embodiment, the driving system 700 may conceptually include at least one of the following: the user interface device 200, the object detection apparatus 300, the communication device 400, the vehicle drive apparatus 600, or the control unit 170.

The traveling system 710 may enable the vehicle 100 to travel.

The traveling system 710 may receive navigation information from a navigation system 770, may provide a control signal to the vehicle drive apparatus 600, and may enable the vehicle 100 to travel. The traveling system 710 may receive object information from the object detection apparatus 300, provide a control signal to the vehicle drive apparatus 600, and enable the vehicle 100 to travel. The traveling system 710 may receive a signal from an external device through the communication device 400, provide a control signal to the vehicle drive apparatus 600, and enable the vehicle 100 to travel.

The parking-lot departure system 740 may perform a departure maneuver for the vehicle 100.

The parking-lot departure system 740 may receive navigation information from the navigation system 770, may provide a control signal to the vehicle drive apparatus 600, and may perform a departure maneuver for the vehicle 100. The parking-lot departure system 740 may receive object information from the object detection apparatus 300, provide a control signal to the vehicle drive apparatus 600, and perform a departure maneuver for the vehicle 100. The parking-lot departure system 740 may receive a signal from an external device through the communication device 400, provide a control signal to the vehicle drive apparatus 600, and perform a departure maneuver for the vehicle 100.

The parking system 750 may perform a parking maneuver for the vehicle 100.

The parking system 750 may receive navigation information from the navigation system 770, may provide a control signal to the vehicle drive apparatus 600, and may perform a parking maneuver for the vehicle 100. The parking system 750 may receive object information from the object detection apparatus 300, provide a control signal to the vehicle drive apparatus 600, and perform a parking maneuver for the vehicle 100. The parking system 750 may receive a signal from an external device through the communication device 400, provide a control signal to the vehicle drive apparatus 600, and perform a parking maneuver for the vehicle 100.

The navigation system 770 may provide navigation information. The navigation information may include at least one of the following: map information, set-destination information, path information based on the set destination, information about various objects on a path, lane information, or current vehicular location information.

The navigation system 770 may include a memory and a processor. The navigation information may be stored in the memory. The processor may control the operation of the navigation system 770.

According to an embodiment, the navigation system 770 may update pre-stored information by receiving information from an external device through the communication device 400.

According to an embodiment, the navigation system 770 may also be categorized as a sub-constituent element of the user interface device 200.

The sensing unit 120 may sense the state of the vehicle 100. The sensing unit 120 may include a posture sensor (for example, a yaw sensor, a roll sensor, a pitch sensor, or the like), a collision sensor, a wheel sensor, a speed sensor, a tilt sensor, a weight-detection sensor, a heading sensor, a gyro sensor, a position module, a vehicle forward/backward movement sensor, a battery sensor, a fuel sensor, a tire sensor, a steering sensor sensing the turning of a steering wheel, an in-vehicle temperature sensor, an in-vehicle humidity sensor, an ultrasonic sensor, an illumination sensor, an accelerator position sensor, a brake pedal position sensor, and other sensors.

The sensing unit 120 may acquire vehicular posture information, vehicular collision information, vehicular direction information, vehicular location information (GPS information), vehicular angle information, vehicular speed information, vehicular acceleration information, vehicular tilt information, vehicular forward/backward movement information, battery information, fuel information, tire information, vehicular lamp information, in-vehicle temperature information, and in-vehicle humidity information. Furthermore, the sensing unit 120 may acquire signals that result from sensing a steering wheel rotation angle, outside-vehicle illumination, pressure applied to an acceleration pedal, pressure applied to a brake pedal, and the like.

The sensing unit 120 may further include an acceleration pedal sensor, a pressure sensor, an engine speed sensor, an airflow sensor (AFS), an air temperature sensor (ATS), a water temperature sensor (WTS), a throttle position sensor (TPS), a TDC sensor, a crank angle sensor (CAS), and other sensors.

The vehicular interface unit 130 may serve as a path to various types of external devices connected to the vehicle 100. For example, the vehicular interface unit 130 may include a port that enables a connection with a mobile terminal and may be connected to the mobile terminal through the port. In this case, the vehicular interface unit 130 may exchange data with the mobile terminal.

The vehicular interface unit 130 may serve as a path for supplying electric energy to the connected mobile terminal. In a case where the mobile terminal is electrically connected to the vehicular interface unit 130, the vehicular interface unit 130 may supply electric energy, supplied from the power supply unit 190, to the mobile terminal under the control of the control unit 170.

The memory 140 is electrically connected to the control unit 170. Basic data for the units, control data for controlling operations of the units, and data, which are input and output, may be stored in the memory 140. Examples of the memory 140 may include various hardware storage devices, such as a ROM, a RAM, an EPROM, a flash drive, and a hard drive. Programs for processing or control by the control unit 170, and various types of data for the overall operation of the vehicle 100 may be stored in the memory 140.

According to an embodiment, the memory 140 may be configured to be integrated with the control unit 170 or may be implemented as a sub-constituent element of the control unit 170.

The control unit 170 may control the overall operation of each unit within the vehicle 100. The control unit 170 may be referred to as an Electronic Control Unit (ECU).

The power supply unit 190 may supply electric power necessary for the operation of each constituent element under the control of the control unit 170. Specifically, the power supply unit 190 may receive power supplied from the battery inside the vehicle 100, or from other sources.

At least one processor and the control unit 170, which are included in the vehicle 100, may be implemented using at least one of the following: application-specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, or electric units performing other functions.

In addition, a driver monitoring apparatus 800, which is included in the vehicle 100 or is detachably attached thereto, is configured to determine a driver's state (for example, drowsiness, inattentiveness, or the like) by monitoring the driver's gaze dispersion and to output a warning alert based on the driver's determined state.

The driver monitoring apparatus 800 may also be referred to as an improved Advanced Driver Monitoring System (DMS) or an improved Advanced Driver Monitoring Apparatus.

The driver monitoring apparatus 800 may change an attention focus region to which the driver's gaze is directed, based on the travel information of the vehicle, specifically, on vehicle travel operation data and travel environment data, thereby determining the driver's state.

For example, the driver monitoring apparatus 800 may change one or more of the following determination references: the size of the attention focus region, the location of the attention focus region, the number of attention focus regions, or the duration of the driver's fixed gaze, thereby monitoring the driver's state.

In addition, the driver monitoring apparatus 800 may adjust the sensitivity level for the driver's gaze dispersion partially occurring within the attention focus region in a manner that varies with the travel information of the vehicle, more particularly, at least one of the following: the vehicle travel operation data or the travel environment data.

For example, when the result of detecting the travel information of the vehicle indicates that the driver's gaze dispersion contributes to driving, the driver monitoring apparatus 800 may reduce the sensitivity level for the driver's gaze dispersion partially occurring within the attention focus region. When the result of detecting the travel information of the vehicle indicates that the driver's gaze dispersion interferes with driving, the driver monitoring apparatus 800 may increase the sensitivity level for the driver's gaze dispersion partially occurring within the attention focus region. Consequently, these sensitivity level adjustments may monitor the driver's state.

In addition, in this manner, the driver monitoring apparatus 800 may perform learning of the attention focus region and the driver's gaze dispersion, which serve as determination references applied in a manner that varies with the travel information of the vehicle. Accordingly, even when the same travel information is input, the attention focus region and/or the gaze dispersion may be applied in such a manner that they have sensitivity level values that vary from one driver to another.

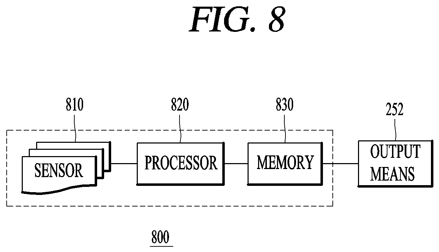

FIG. 8 is a block diagram illustrating an exemplary configuration of the driver monitoring apparatus according to an embodiment of the present disclosure.

With reference to FIG. 8, the driver monitoring apparatus 800 may be configured to include a sensor 810, a processor 820, and a memory 830 and operate in conjunction with various output means 252 of the vehicle to provide the warning alert. Alternatively, a means for outputting a DMS alert, for example, an LED module, a speaker, or the like, may also be included in the driver monitoring apparatus 800 itself.

Based on surrounding environment information of the vehicle, the driver monitoring apparatus 800 may vary the attention focus region to which the driver's gaze is directed and adjust the sensitivity level for the driver's gaze dispersion partially occurring within the attention focus region.

The driver monitoring apparatus 800 may adaptively determine the extent of the driver's gaze dispersion by varying the attention focus region and/or adjusting the extent of the driver's gaze dispersion in this manner. Accordingly, this determination can prevent false triggers or frequent triggers of a gaze dispersion alarm and contribute to the driver's safe driving.

The sensor 810 may include a DSM camera that is installed on the front side of the interior of the vehicle and is configured in such a manner as to recognize the driver's face and gaze direction. In order to monitor the driver's state, the sensor 810 may acquire the driver's image data by capturing an image of the driver's face. For example, the DSM camera may acquire the driver's facial image, analyze the acquired facial image, check the driver's gaze direction, and check whether or not the driver is drowsy.

According to an embodiment, in order to ascertain the driver's state more accurately, the sensor 810 may additionally include other sensors within the vehicle, for example, a microphone, a biometric sensor, a breathing detection sensor, a posture detection sensor, and the like. However, according to the present disclosure, the extent of the driver's gaze dispersion partially occurring within the attention focus region, which serves as a determination reference for ascertaining the driver's state, may be determined by analyzing the image acquired by the above-described DSM camera or other vision sensors.

According to an embodiment, the sensor 810 may be configured to include an ADAS camera that is mounted on the exterior of the vehicle. Alternatively, the sensor 810 may be configured to receive the monitoring result from the ADAS camera from a reception unit (not illustrated) described below.

The processor 820 may receive the surrounding environment information of the vehicle through either the reception unit (not illustrated) or the sensor 810.

The receivable surrounding environment information of the vehicle may refer to various types of information and data, which are associated with the external environment of the vehicle that, during vehicle travel, is monitored through a front-facing camera on the vehicle, for example, the ADAS camera.

The surrounding environment information of the vehicle may include traffic information, such as road geometry information of the vehicle's travel road, traffic volume along the travel road, and traveling speed, and surrounding environment data, such as weather information, ambient sound around the vehicle, and ambient light. The road geometry information here may include a road longitudinal inclination, a road transverse inclination, a road curvature, and the like and be pre-stored in a predetermined service server (not illustrated). In addition, the road traffic information may be provided from, for example, a traffic information provision server (not illustrated).

The driver monitoring apparatus 800 may include a communication unit (not illustrated) that performs the function of receiving the surrounding environment information of the vehicle and transferring a control signal, corresponding to the driver's state, to an output means 252.

The communication unit may communicate over, for example, a Local Area Network (LAN), a Metropolitan Area Network (MAN), a Wide Area Network (WAN), the Internet, 2G, 3G, 4G, and LTE mobile communication networks, Bluetooth, Wi-Fi, Wibro, a satellite communication network, and a Low Power Wide Area Network (LPWAN), such as LoRa or Sigfox. The communication unit may comply with either a wired or a wireless communication scheme.

According to an embodiment, the surrounding environment information of the vehicle may also be received through an On-Board Diagnostics (OBD) interface (not illustrated), a GNSS reception module, or the like.

Based on the received surrounding environment information of the vehicle, the processor 820 may apply a determination reference for determining the driver's state in an adaptively variable manner.

Specifically, based on the received surrounding environment information of the vehicle, the processor 820 may adaptively vary the attention focus region to be monitored. Specifically, based on the received surrounding environment information of the vehicle, the processor 820 may change at least one of the following: the location of the attention focus region to be monitored, the size of the attention focus region, the number of attention focus regions, or the duration of the driver's gaze fixation. Furthermore, based on either the duration for which the driver's gaze direction remains within the attention focus region or the frequency with which the driver's gaze remains within the attention focus region, the processor 820 may determine the extent of the driver's gaze dispersion.

In addition, based on the received surrounding environment information of the vehicle, the processor 820 may adaptively adjust the sensitivity level for the driver's gaze dispersion partially occurring within the attention focus region.

In a case where, based on the received surrounding environment information of the vehicle, the processor 820 adjusts the sensitivity level for the driver's gaze dispersion in such a manner as to remain below an initial value, the processor 820 may further reduce either the necessary duration for which the driver's gaze is fixed to the attention focus region or the necessary number of times the driver's gaze is fixed to the attention focus region, thereby monitoring the driver's states, such as the driver's gaze dispersion.

In a case where, based on the received surrounding environment information of the vehicle, the processor 820 raises the sensitivity level for the driver's gaze dispersion above the initial value for the purpose of adjustment, the processor 820 may increase either the necessary duration for which the driver's gaze is fixed to the attention focus region or the necessary number of times the driver's gaze is fixed to the attention focus region, thereby monitoring the driver's states, such as the driver's gaze dispersion.

In a case where a plurality of attention focus regions are provided, the processor 820 may adjust the sensitivity level for the driver's gaze dispersion partially occurring within each of the attention focus regions in such a manner that they differ from each other. For example, the sensitivity level for the driver's gaze dispersion partially occurring within the travel-related attention focus region in front of the vehicle and the sensitivity level for the driver's gaze dispersion partially occurring within the attention focus region on a rearview mirror may be adjusted in such a manner that they have different values.

The memory 830 may store various types of information, data, and programs, which are associated with the operation of the driver monitoring apparatus 800. The memory 830 may store driver monitoring data, acquired by the sensor 810, the surrounding environment information of the vehicle, received through the reception unit (the sensor 810, the communication unit, the OBD interface, or the like), data, and programs. In addition, the memory 830 may train a state prediction model for each driver, which aligns with the varied determination reference, using various types of information, data, and programs, which are associated with the above-described adaptive determination reference. At this point, the memory 830 may also train the state prediction model for each driver, which aligns with the varied determination reference, by additionally utilizing big data including multiple types of data associated with vehicles, traffic, environment, and the like.

The processor 820 may generate a control signal according to the driver's state determined to align with the above-described adaptive determination reference in such a manner that an alarm for calling the driver's attention is output.

The output means 252 may include, for example, one or more of the following: an in-vehicle speaker, a warning alarm light on a dashboard, a horn, or a display. Based on the control signal generated by the processor 820, the output means 252 may also output an alert signal that makes a request to the driver for an interactive response. For example, the alert signal that makes a request to the driver for an interactive response may refer to an auditory or visual alert signal that prompts the driver's feedback response (for example, opening and closing his/her mouth or answering an arbitrary question) to help the driver focus on the vehicle travel.

After the sensitivity level for the driver's gaze dispersion is changed based on the received surrounding environment information, in response to the recognition that the cause of the change in the sensitivity level no longer exists, the processor 820 may restore the varied attention focus region and the sensitivity level (for example, initial setting values) of the driver's gaze dispersion to their original states, respectively.

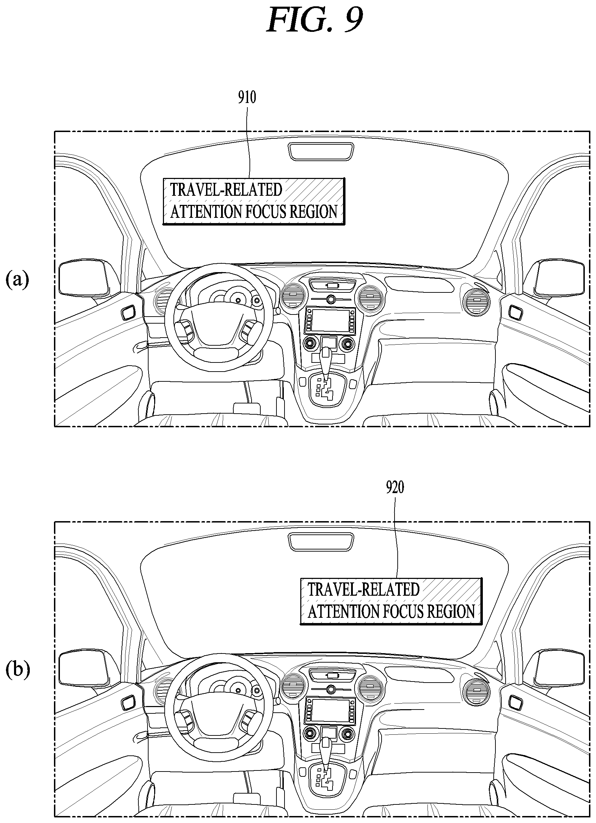

FIGS. 9, 10, 11, and 12 are views illustrating various examples, respectively, where the attention focus region, which serves as a reference for monitoring the driver's state, is changed based on the operation of the driver monitoring apparatus according to the embodiment of the present disclosure.

The driver monitoring apparatus 800 according to the present disclosure monitors the extent of the driver's gaze dispersion by monitoring whether or not the driver's gaze direction falls within the attention focus region (or the travel-related attention focus region).

Normally, the attention focus region is set as a predetermined region and location, which is associated with the DMS alert, for example, as the middle region of a front windshield corresponding to the driver's seat of the vehicle.

Based on the received surrounding environment information and the sensing result from a DMS camera, the driver monitoring apparatus 800 according to the present disclosure may adaptively change the attention focus region that serves as the reference for monitoring the driver's state.

Based on the received surrounding environment information and the sensing result from the DMS camera, the driver monitoring apparatus 800 may change one or more of the following: the location of the attention focus region, the size of the attention focus region, the number of attention focus regions, or the duration of the driver's gaze fixation. Thereafter, based on the duration for which the driver's gaze direction remains within the attention focus region or on the frequency with which the driver's gaze remains within the attention focus region, the driver monitoring apparatus 800 may monitor the driver's state, such as drowsiness or inattentiveness, by determining the extent of the driver's gaze dispersion.

FIG. 9 illustrates an example where the location of the attention focus region is changed based on the surrounding environment information of the vehicle and the sensing result from the DMS camera. For example, an attention focus region (hereinafter referred to as an 'initial attention focus region') 910 illustrated in (a) of FIG. 9 is set as the middle region of the front windshield corresponding to the driver's seat. As illustrated in (b) of FIG. 9, based on the travel information of the vehicle, the attention focus region 910 may be repositioned to the middle region 920 of the front windshield in front of the front passenger seat.

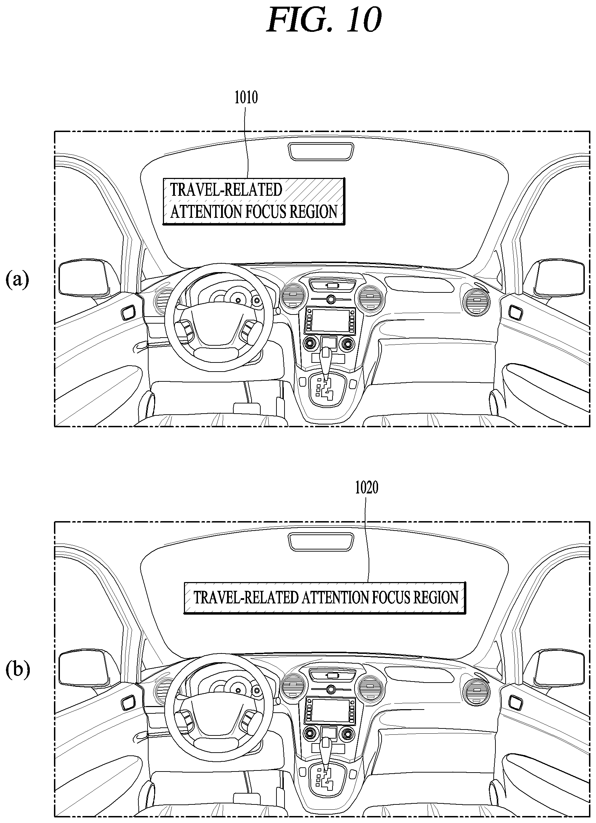

FIG. 10 illustrates an example where the size of the attention focus region is changed based on the surrounding environment information of the vehicle and the sensing result from the DMS camera. For example, as illustrated in (b) of FIG. 10, based on the surrounding environment information and the sensing result from the DMS camera, an initial attention focus region 1010 illustrated in (a) of FIG. 10 may be changed to an attention focus region 1020 expanded from the initial attention focus region up to the front windshield in front of the front passenger seat.

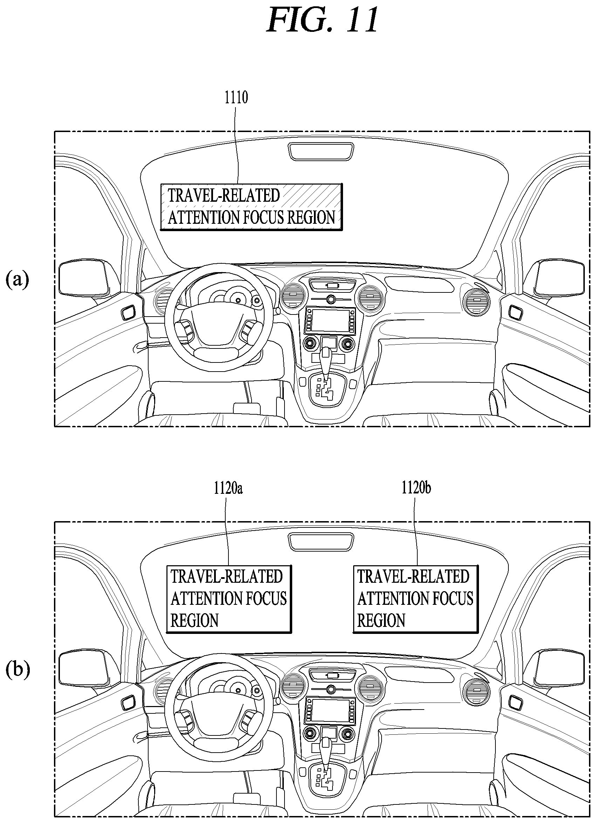

FIG. 11 illustrates an example where the number of attention focus regions is changed (for example, increased) based on the surrounding environment information of the vehicle and the sensing result from the DMS camera. For example, as illustrated in (b) of FIG. 11, based on the surrounding environment information of the vehicle and the sensing result from the DMS camera, the number of attention focus regions may be increased, thereby expanding the initial attention focus region 1110 illustrated in (a) of FIG. 11 into a first attention focus region 1120a, matched to the initial attention focus region, and a second attention focus region 1120b, matched to the middle region of the front windshield in front of the front passenger seat.

As illustrated in (b) of FIG. 11, the number of attention focus regions may be changed in a situation in which the driver is required to focus attention on both the roadway ahead and the side (the right or the left) of the vehicle. At this point, when the situation in which the driver is required to focus attention on both the roadway ahead and the side of the vehicle comes to an end, as illustrated in (a) of FIG. 11, the number of attention focus regions may be reduced, thereby integrating the first attention focus region 1120a and the second attention focus region 1120b into the initial attention focus region 1110.

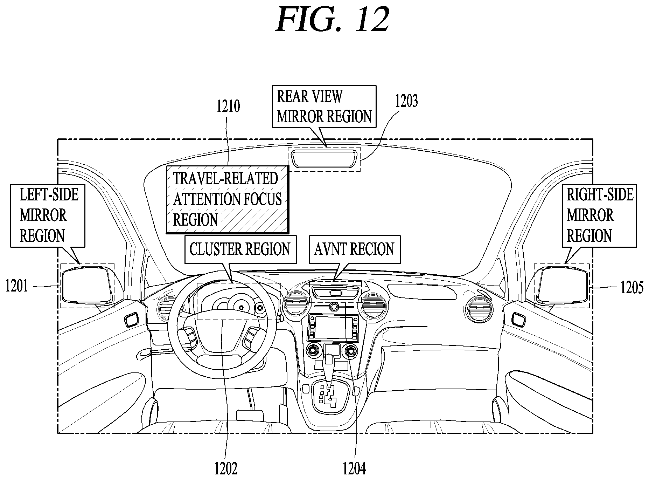

FIG. 12 illustrates various regions to which the driver's gaze, monitored during vehicle travel, may be directed. Based on the above-described travel information, one or several of these regions may be added as attention focus regions to be monitored and, in this case, may be set to have different sensitivity levels of the driver's gaze dispersion.

As illustrated in FIG. 12, in addition to an initial attention focus region 1210, the possible attention focus regions may include a vehicle's left-side mirror region 1201, a vehicle's right-side mirror region 1205, a cluster region 1202 on which a vehicular instrument dashboard is displayed, a vehicle's rearview mirror region 1203, and a vehicle's Audio Video Navigation Telematics (AVNT) system region 1204. However, the attention focus regions illustrated in FIG. 12 are exemplary. One or more attention focus regions may be added to the illustrated attention focus regions, or one or more of the illustrated attention focus regions may be omitted.

Based on the surrounding environment information and the sensing result from the DMS camera, the driver monitoring apparatus 800 may change an attention focus region to be monitored, which is selected from among the possible attention focus regions 1210, 1201, 1202, 1203, 1204, and 1205. In addition, the driver monitoring apparatus 800 may adjust the sensitivity level for the driver's gaze dispersion partially occurring within the attention focus region selected from among the possible attention focus regions 1210, 1201, 1202, 1203, 1204, and 1205. At this point, in a case where a plurality of attention focus regions are selected, different sensitivity levels of the driver's gaze dispersion may be applied to the attention focus regions, respectively.

The driver monitoring apparatus 800 may determine whether or not attentive driving is necessary by ascertaining the driver's state based on the changed attention focus region and/or the sensitivity level for the driver's gaze dispersion. In such a case, the driver monitoring apparatus 800 may transfer a corresponding alert signal (for example, a control signal for DMA alerting) to one or more output means within the vehicle.

The driver monitoring apparatus 800 may recognize that the causes of changes in the attention focus region and/or the sensitivity level for the driver's gaze dispersion no longer exist, and restore the attention focus region and/or a value of the sensitivity level for the driver's gaze dispersion to their original states, respectively. Accordingly, the initial attention focus region 1210 and an initial value of the driver's gaze dispersion level for the initial attention focus region 1210 serve as determination references for determining the driver's state, as they did previously.

Throughout the present specification, raising (increasing) the sensitivity level for the driver's gaze dispersion means setting an allowable threshold duration, representing the maximum allowable time the driver does not focus attention on the determined attention focus region, to be shorter when determining inattentive driving, or means setting an allowable accumulated threshold duration, representing the total time the driver's eyes remain closed, to be shorter when determining inattentive driving.

For example, when an initial value of the allowable threshold duration, for which monitoring detects that the driver does not focus attention on the roadway ahead, is 3 seconds (according to Euro NCAP), raising (increasing) the sensitivity level for the driver's gaze dispersion may involve an adjustment to a value of less than 3 seconds (for example, 2 seconds or 2.5 seconds). Alternatively, for example, when an initial value of the allowable accumulated threshold duration, for which monitoring detects that the driver does not focus attention on the roadway ahead, is 10 seconds within 30 seconds (according to Euro NCAP), raising (increasing) the sensitivity level for the driver's gaze dispersion may involve an adjustment to a value of less than 10 seconds (for example, 9 seconds or 9.5 seconds) within 30 seconds.

In addition, throughout the present specification, lowering (decreasing) the sensitivity level for the driver's gaze dispersion means setting the allowable threshold duration, representing the maximum allowable time the driver does not focus attention on the determined attention focus region, to be longer when determining inattentive driving, or means setting the allowable accumulated threshold duration, representing the total time the driver's eyes remain closed, to be longer when determining inattentive driving.

For example, when the initial value of the allowable threshold duration, for which monitoring detects that the driver does not focus attention on the roadway ahead, is 3 seconds (according to Euro NCAP), lowering (reducing) the sensitivity level for the driver's gaze dispersion may involve an adjustment to a value of more than 3 seconds (for example, 3.5 seconds). Alternatively, for example, when the initial value of the allowable accumulated threshold duration, for which monitoring detects that the driver does not focus attention on the roadway ahead, is 10 seconds within 30 seconds (according to Euro NCAP), lowering (reducing) the sensitivity level for the driver's gaze dispersion may involve an adjustment to a value of more than 10 seconds (for example, 10.5 seconds or 11 seconds) within 30 seconds.

The driver monitoring apparatus 800 for a vehicle may receive the surrounding environment information from a first sensor mounted on the exterior of the vehicle, which monitors the surrounding environment of the vehicle.

In addition, the driver monitoring apparatus 800 may monitor the extent of the driver's gaze dispersion partially occurring within the attention focus region using a second sensor mounted inside the vehicle, which detects the driver's face and gaze direction during vehicle travel. For example, the driver monitoring apparatus 800 may monitor whether the extent of the driver's gaze dispersion remains within the allowable threshold duration or within the allowable accumulated threshold duration, using the second sensor.

The processor 820 of the driver monitoring apparatus 800 may determine whether or not to change the attention focus region based on the received surrounding environment information, and, according to the determination, recognize the driver's state corresponding to the extent of the driver's gaze dispersion detected by the second sensor.

In addition, the processor 820 of the driver monitoring apparatus 800 may adjust the sensitivity level for the driver's gaze dispersion partially occurring within the attention focus region on the basis of both the surrounding environment information monitored by the first sensor and the sensing result from the second sensor.

According to an embodiment, the first sensor may be the ADAS camera mounted on the exterior of the vehicle, and the second sensor may be the DMS camera mounted on the front side of the interior of the vehicle.

Based on both the surrounding environment information of the vehicle, acquired by the ADAS camera and the sensing result from the DMS camera (for example, the analysis of the image acquired by the DMS camera), the processor 820 may change the attention focus region and/or adjust the sensitivity level for the driver's gaze dispersion.

At this point, the change in the attention focus region refers to a change in one or more of the following: the location of a predetermined attention focus region, the size of the predetermined attention focus region, the number of predetermined attention focus regions, or the duration of the driver's gaze fixation. For example, in a case where the predetermined attention focus is expanded in size or where a mirror region/rearview mirror region is added in addition to the predetermined attention focus region, this may be considered a change in the attention focus region.

According to an embodiment, the processor 820 of the driver monitoring apparatus 800 changes the sensitivity level for the driver's gaze dispersion based on the surrounding environment information monitored by the first sensor. Then, in response to the recognition that the cause of the change in the sensitivity level no longer exists, the processor 820 may restore the changed attention focus region to its original state or restore the changed sensitivity level for the driver's gaze dispersion to its initial setting value.

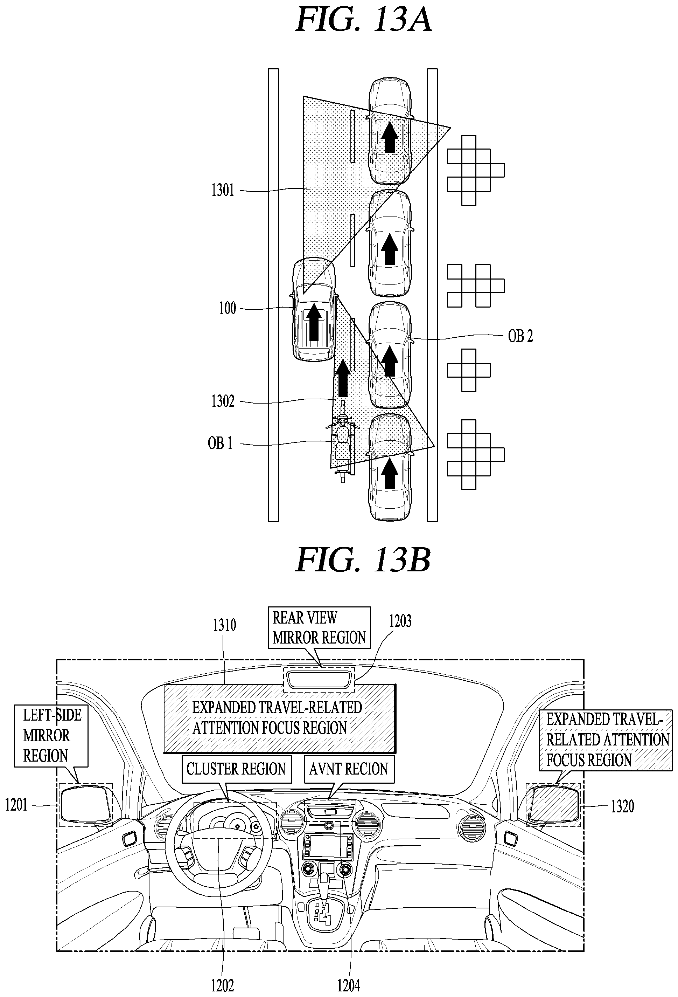

FIGS. 13A and 13B are exemplary views, each illustrating the expansion of the attention focus region in a case where the vehicle travels beside a slow lane, using the driver monitoring apparatus according to the embodiment of the present disclosure.

The processor 820 of the driver monitoring apparatus 800 may detect the presence of a slowly traveling object beside the vehicle through the first sensor, for example, the ADAS camera, and acquire this detection as the surrounding environment information of the vehicle. The processor 820 may monitor the driver's state by changing the attention focus region in such a manner as to include a region associated with the direction in which the slowly traveling object is present.

According to an embodiment, while the slowly traveling object beside the vehicle is detected, the processor 820 may reduce the sensitivity level for the driver's gaze dispersion partially occurring within the attention focus region.

For example, with reference to FIG. 13A, the presence of an object OB1 (for example, a motorcycle) moving beside the vehicle 100 and the presence of an object OB2 slowly traveling in the lane beside (to the right side of) the traveling line for the vehicle 100, spaced apart from the object OB1, may be monitored through the ADAS camera of the vehicle 100.

At this point, a BSD alarm does not occur because the object OB2 does not approach the vehicle 100. However, due to the presence of the slowly traveling OB2, the driver repeatedly focuses attention on the lane adjacent to the travel lane.

Accordingly, in a condition where a sufficient distance between the vehicle 100 in the travel lane and the object OB2 in the lane beside the vehicle 100 is recognized, the processor 820 of the driver monitoring apparatus 800, as illustrated in FIG. 13B, may monitor whether or not the driver's gaze dispersion occurs, with the initial attention focus region (for example, an expanded attention focus region 1310) being expanded and/or a region (for example, a left-side mirror region 1320) where the object OB2 is present being included as an additional attention focus region.

In addition, the sensitivity level for the driver's gaze dispersion partially occurring within each of the expanded and added attention focus regions 1310 and 1320 is lowered (reduced) for the purpose of adjustment. For example, the sensitivity level for the driver's gaze dispersion may be reduced by multiplying the initial value by a weight value (for example, 1.1 to 1.2) in such a manner that the allowable threshold duration or the allowable accumulated threshold duration for which the driver does not focus attention on the attention focus region is further extended.

Through a change in this determination reference, a false alarm associated with the driver's gaze dispersion that occurs because the driver of the vehicle frequently focuses attention on a nearby vehicle is prevented.

In a case where the causes of changes in the attention focus region and/or the sensitivity level for the driver's gaze dispersion no longer exist, such as when the vehicle 100 travels ahead of the slowly traveling object OB2 or when a situation on the road on which the vehicle 100 slowly travels no longer exists, the attention focus region and/or the sensitivity level for the driver's gaze dispersion, that is, a determination reference for inattentive driving may be restored to its original state.

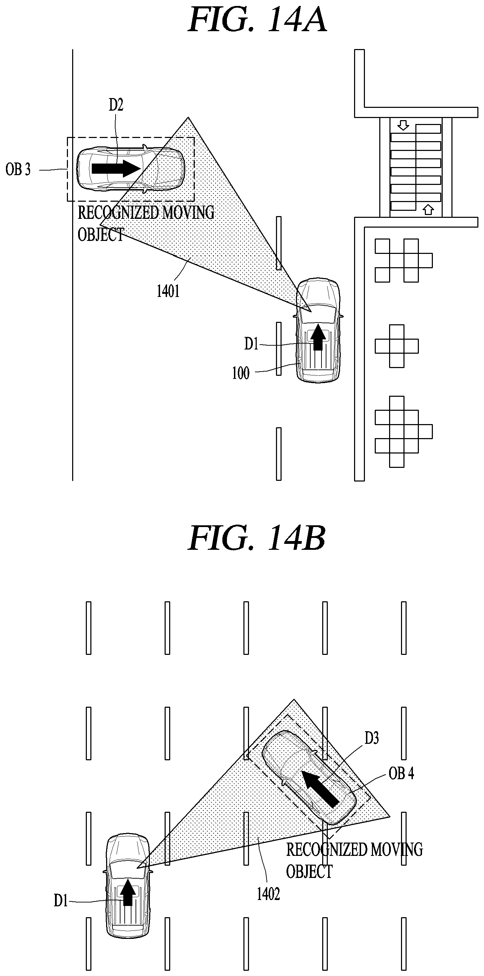

FIGS. 14A and 14B are exemplary views, each illustrating the adjustment of the sensitivity level for the driver's gaze dispersion when an object likely to cause a collision is present in the vicinity of the vehicle, using the driver monitoring apparatus according to the embodiment of the present disclosure.

The processor 820 of the driver monitoring apparatus 800 may detect the presence of an object likely to cause a collision in the vicinity of the vehicle through the first sensor, for example, the ADAS camera, and acquire this detection as the surrounding environment information of the vehicle.

At this point, as illustrated in FIGS. 14A and 14B, it is assumed that a sufficient distance between the object likely to cause a collision and that the current location of the vehicle 100 is recognized. This is because a warning alert or a traveling operation is performed through another safety apparatus/system within the vehicle in a case where it is recognized that the object and the vehicle are likely to collide due to the short distance between them.

Moving objects OB3 and OB4, illustrated in FIGS. 14A and 14B, may include a vehicle that does not keep its lane or that changes lanes, a vehicle that runs traffic signals, a two-wheeled drive means, an electric scooter, and other moving obstacles.

For example, with reference to FIG. 14A, in a case where the moving object OB3 is monitored while approaching from the direction D2, which is perpendicular to the travel direction D1 of the vehicle 100 at a crossroad, there is a likelihood that the moving object OB3 may collide with the vehicle 100, even though it has not yet approached the travel lane of the vehicle 100. Therefore, the driver can focus attention on the direction D2, which is perpendicular and from which the moving object OB3 approaches during driving.

In addition, for example, as illustrated in FIG. 14B, in a situation where a road has many lanes, in a case where the object OB4 in a moving direction D3 that abruptly changes or attempts to change lanes from the lane that is two or more lanes away from the travel lane of the vehicle is monitored (such as when the object OB4 in the moving direction D3 changes lanes without turning on the blinker), there is a likelihood that the vehicle and the object OB4 may collide, even though the travel lane D1 of the object OB4 is two lanes away from the travel direction of the vehicle. That is, the driver can focus attention on the object OB4 that changes or attempts to change lanes from a location that is at a somewhat far distance, even while the vehicle travels in the travel direction D1 in the lane.

In this case, that is, in a situation where, as illustrated in FIG. 14A or 14B, the likelihood of a collision is not high, but the driver is encouraged to focus attention on collision prevention or remain attentive to driving, the processor 820 of the driver monitoring apparatus 800 may monitor whether or not the driver is inattentive to driving by reducing the sensitivity level for the driver's gaze dispersion while an object likely to cause a collision is detected.

For example, in the situation in FIG. 14A, the processor 820 may establish an attention focus range 1401, which corresponds to the direction D2 perpendicular to the travel direction D1 of the vehicle 100, as an expanded attention focus region, and may reduce the sensitivity level for the driver's gaze dispersion partially occurring within the existing attention focus region.

In addition, for example, in the situation in FIG. 14B, the processor 820 may establish an attention focus range 1402, which corresponds to the moving direction D3 of the vehicle (OB4) that abruptly changes lanes while being at a distance from the travel direction D1 of the vehicle 100, as an expanded attention focus region and reduce the sensitivity level for the driver's gaze dispersion partially occurring within the existing attention focus region.

In an embodiment, according to the result of an image acquired by the second sensor, for example, the DMS camera that detects the driver's gaze direction, the processor 820 of the driver monitoring apparatus 800 may monitor the driver's state based on the reduced sensitivity level for the driver's gaze dispersion while the driver's gaze direction aligns with the direction in which an object likely to cause a collision is present.

Even after the sensitivity level for the driver's gaze dispersion is reduced, the processor 820 of the driver monitoring apparatus 800 monitors the surrounding environment, that is, the presence and moving direction of an object likely to cause a collision, through the first sensor, for example, the ADAS camera.

When, as a result of monitoring, an object likely to cause a collision disappears from the recognition range of the ADAS camera, the processor 820 of the driver monitoring apparatus 800 may restore the reduced sensitivity level for the driver's gaze dispersion to its initial value, that is, its previous state and monitor whether or not the driver is inattentive to driving.

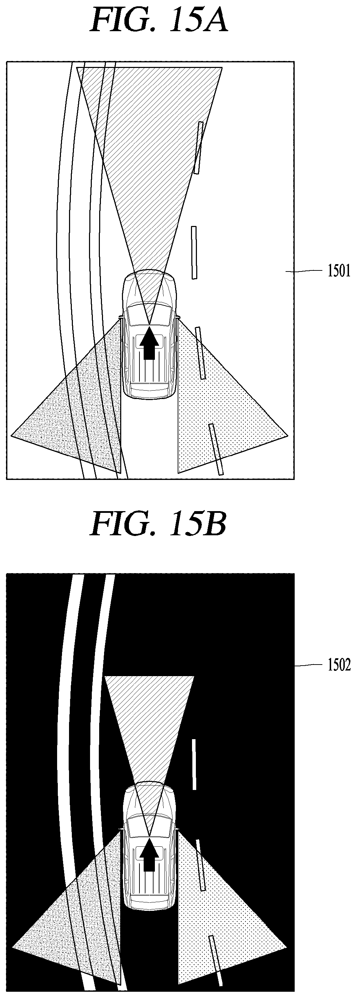

FIGS. 15A and 15B are exemplary views that are referenced to describe the application of the driver's gaze dispersion in a manner that varies with a change in visual distance, using the driver monitoring apparatus according to the embodiment of the present disclosure.

In a case where the driver's visual distance is insufficient due to weather situations such as rain or dense fog, the likelihood of a collision with another vehicle in the travel lane increases.

Accordingly, the driver monitoring apparatus 800 according to the present disclosure may compute the driver's visual distance based on the surrounding environment information, such as weather conditions and, on the basis of the computed visual distance, adjust the sensitivity level for the driver's gaze dispersion. For example, when the computed visual distance is shorter than a preset visual reference distance, the driver is required to strictly focus attention on the roadway ahead for safe driving and thus may lower (increase) the sensitivity level for the driver's gaze dispersion.

The computation of the driver's visible distance starts with the process of recognizing the travel lane of the vehicle, the surrounding lanes (for example, lane width or the like), and other vehicles through the first sensor, for example, the ADAS camera, using a well-known edge detection method, a feature extraction method, a grouping method, and similar methods. Next, the driver monitoring apparatus 800 may compute the driver's visible distance using a distance from the travel lane and a preset visual distance constant.

At this point, the visible distance constant represents a person's visible distance relative to the visible distance of the first sensor (for example, the ADAS camera) and may, for example, be set to a value below 1. In addition, at this point, the computation of the driver's visible distance may involve an approximate estimation.

In sunny weather, the visible distance may be maximized, and in weather conditions such as rain or dense fog, the visible distance may be shortened (reduced).

The processor 820 of the driver monitoring apparatus 800 may receive visible distance information as the surrounding environment information. The visible distance information is estimated (or computed) on the basis of an image of the roadway ahead of the vehicle, which is acquired by the first sensor, for example, the ADAS camera. The processor 820 may adjust the sensitivity level for the driver's gaze dispersion in a manner that varies according to the received visible distance information.

As illustrated in FIG. 15A, in environment 1501 where the weather is sunny, it is determined, based on the monitoring result from the first sensor, that the visible distance is not reduced. Therefore, according to a preset determination reference, it may be determined whether or not the driver's gaze dispersion occurs.

As illustrated in FIG. 15B, in environment 1502 where the weather is unfavorable due to rain, dense fog, fine dust, snow, or similar conditions, it may be recognized, based on the monitoring result from the first sensor, that the visual distance is shortened, and it may be determined whether or not the driver's gaze dispersion occurs by raising (increasing) the sensitivity level for the driver's gaze.

According to the present disclosure, in a case where, in this manner, the driver's visual distance is shortened due to weather conditions or similar factors, a higher weight value may be assigned to safe driving than to frequent-alarm prevention, and the sensitivity level for the driver's gaze dispersion may be raised for the purpose of adjustment. Consequently, DMS may perform monitoring to enhance safe driving.

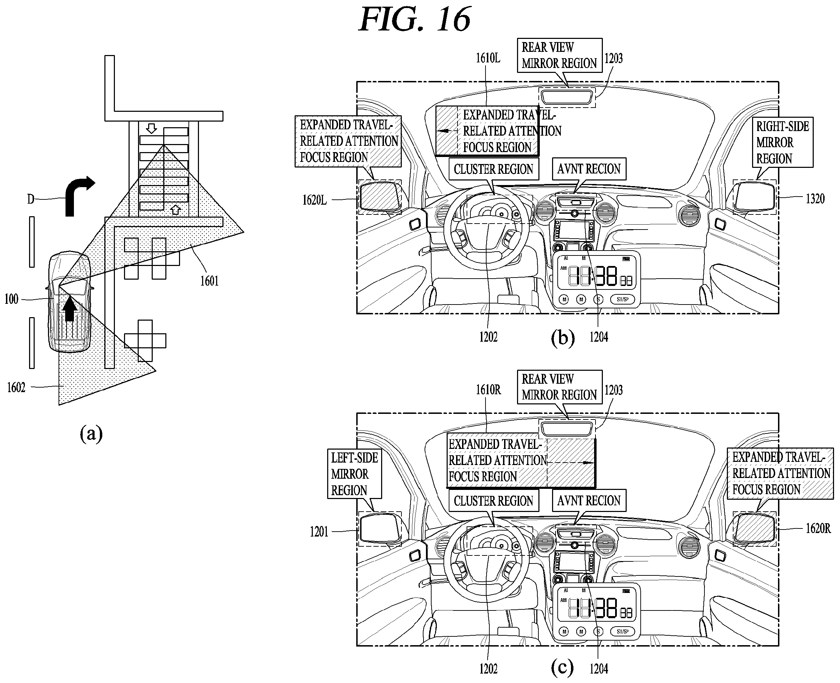

FIG. 16 is a set of views that is referenced to describe a change in the attention focus region in a case where the vehicle is expected to turn, using the driver monitoring apparatus according to the embodiment of the present disclosure.

In a case where the travel direction of the vehicle is changed, the driver monitoring apparatus 800 may receive travel-associated information, such as a detected change in the steering angle of the vehicle and a detected steering wheel angle, and recognize a change in the travel direction of the vehicle. However, before changing the actual travel direction of the vehicle, the driver shifts his/her gaze in advance toward the intended travel direction. A DMS may determine this gaze shift as inattentive driving.

The following method is proposed to prevent this gaze shift from being falsely identified as the driver's gaze dispersion. This method predicts a change in the travel direction of the vehicle or predicts the turning of the vehicle and accordingly adjusts the sensitivity level for the driver's gaze dispersion.

The processor 820 of the driver monitoring apparatus 800 may receive as the surrounding environment information a change in a tracking path within the lane in the travel direction of the vehicle. This change may be acquired by the first sensor, for example, the ADAS camera. When the turning of the vehicle is predicted based on the detection of the change in the tracking path within the lane, the processor 820 may reduce the sensitivity level for the driver's gaze dispersion.

In addition, according to an embodiment, the processor 820 may add as the attention focus region a region associated with a direction corresponding to the detected change in the vehicle's tracking path within the lane and monitor the driver's gaze dispersion through the second sensor, for example, the DMS camera.

With reference to FIG. 16, in a situation (a) where the vehicle 100 currently travels in the straight direction while positioned in a lane that allows right turns at a crossroad, the driver can focus attention on a right-side attention focus range 1602 and an attention focus range 1601, which corresponds to the right turn direction, before the vehicle makes a right turn.

From (c) of FIG. 16, it can be seen that, in the situation (a), the existing attention focus region is changed in such a manner as to include an attention focus region 1610R and a right-side mirror region 1620R. The attention focus region 1610R and the right-side mirror region 1620R are generated by expanding the existing attention focus region in the right-side direction. Accordingly, the processor 820 of the driver monitoring apparatus 800 determines whether or not driving is inattentive by reducing the sensitivity level for the driver's gaze dispersion relative to the attention focus regions 1610R and 1620R, which are generated by changing the existing attention focus region. Subsequently, when the vehicle 100 fully enters the lane after completing the right turn (that is, in a state where the vehicle 100 travels parallel to the lane), the determination reference is changed for restoration to the original attention focus region, and the sensitivity level for the driver's gaze dispersion is restored to its original value.

(b) of FIG. 16 illustrates an example where the attention focus regions 1610R and 1620R are included in the attention focus region. The attention focus regions 1610R and 1620R are generated by expanding the existing attention focus region in a manner that corresponds to a situation where the vehicle 100 currently travels in the straight direction while positioned in a lane that allows left turns. At this point, when the vehicle completes a left turn, the attention focus region and the sensitivity level for the driver's gaze dispersion, which were changed, are also restored to their original states, respectively.

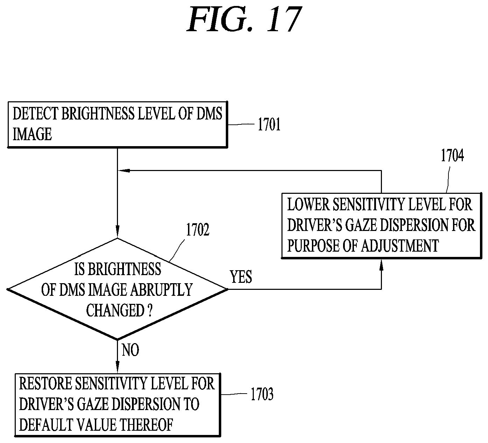

FIG. 17 is a flowchart illustrating the adjustment of the sensitivity level for the driver's gaze dispersion based on a change in the brightness of a DMS image, using the driver monitoring apparatus according to the embodiment of the present disclosure.

The processor 820 of the driver monitoring apparatus 800 for a vehicle according to the present disclosure may adjust the sensitivity level for the driver's gaze dispersion partially occurring within the attention focus region on the basis of the surrounding environment information, which is the monitoring result from the first sensor (for example, the ADAS camera) and the sensing result from the second sensor (for example, the DMS camera).

According to an embodiment, the processor 820 may reduce the sensitivity level for the driver's gaze dispersion for a predetermined time based on the detection of a brightness change in an image (an image including the driver's face, which is acquired by the DMS camera) acquired by the second sensor, the brightness change reaching or exceeding a reference value.

For example, the case where the brightness change, which reaches or exceeds the reference value, is detected in the image acquired by the second sensor refers to a case where the acquired image is abruptly darkened or brightened immediately after the vehicle enters/moves into a dark tunnel, such as when the intensity of direct light abruptly changes due to the sudden blockage of direct sunlight or an oncoming vehicle's high beams.

In this case, the driver blinks or turns his/her face or gaze toward an area with less glare. Alternatively, the driver needs some time for his/her iris to adapt. At this point, when gaze inattentiveness or similar behaviors are determined using the same determination reference, a phenomenon where the DMA generates a false alarm may occur.

Accordingly, the processor 820 of the driver monitoring apparatus 800 according to the present disclosure may analyze the image acquired by the second sensor, detect the amount of direct light reaching the driver's face, and accordingly assign a weight value of the DMS warning alarm. This is done to minimize the phenomenon where the DMS generates a false alarm.

With reference to FIG. 17, the processor 820 of the driver monitoring apparatus 800 according to the present disclosure may detect the brightness level of a DMS image (receive the value of the brightness of the DMS image) based on the analysis of the image acquired by the second sensor (1701).

The processor 820 may determine whether or not the brightness of the DMS image abruptly changed, based on the analysis (1702), and adjust the sensitivity level for the driver's gaze dispersion according to the result of the determination. To this end, frames of the DMS image are divided by a predetermined time interval into groups of frames (for example, 8 to 16 groups of frames), and each group is then compared for brightness with the previous group of frames in the DMS image. Consequently, it may be ascertained whether or not the brightness has abruptly changed.

Specifically, in a case where the brightness of the DMS image changes, but not abruptly, or in a case where the brightness of the DMS image remains mostly unchanged, the sensitivity level for the driver's gaze dispersion is either restored to its default value (1703) or remains unchanged while monitoring whether or not the driver's gaze dispersion occurs.

When it is determined that the brightness of the DMS image has abruptly changed, the sensitivity level for the driver's gaze dispersion may be reduced to prevent a DMS false alarm (1704). Even in such a case, when a predetermined time (the time required for the driver's iris to adapt) elapses or the cause (for example, high beams from other vehicles or abrupt direct light) of the change in the brightness disappears, the sensitivity level for the driver's gaze dispersion is restored to its default value (1703).

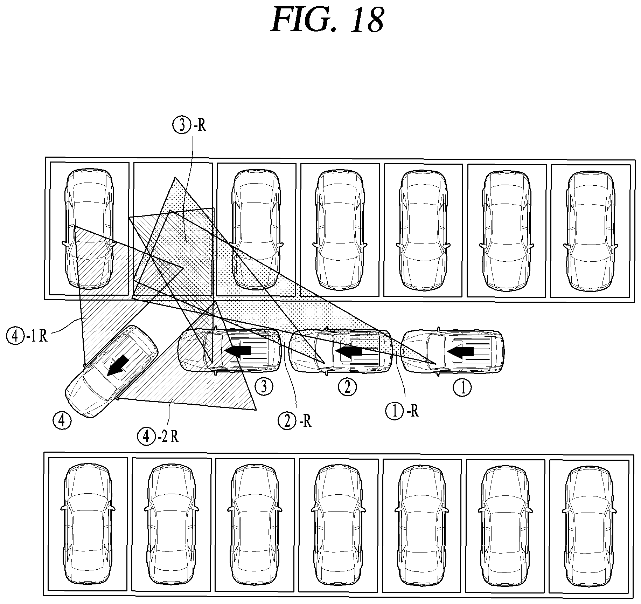

FIG. 18 is a view illustrating the adjustment of the sensitivity level for the driver's gaze dispersion in parking mode when parting the vehicle, using the driver monitoring apparatus according to the embodiment of the present disclosure.

The processor 820 of the driver monitoring apparatus 800 according to the present disclosure may receive a parking space recognized or detected by the first sensor (for example, the ADAS camera) as the surrounding environment information. Alternatively, in another example, the driver monitoring apparatus 800 may recognize that the vehicle is located in the parking space through another apparatus or server or through other vehicle equipment.

The processor 820 may reduce the sensitivity level for the driver's gaze dispersion while the vehicle parks in the parking space recognized in this manner. That is, the sensitivity level for the driver's gaze dispersion may be reduced until parking is complete in the recognized parking space. Alternatively, according to an embodiment, only the attention focus region may also be expanded while maintaining the sensitivity level for the driver's gaze dispersion.

According to an embodiment, the processor 820 may determine the parking direction of the vehicle based on data collected by the first sensor (for example, the ADAS sensor) in the recognized parking space and expand the attention focus region toward a gaze direction corresponding to the determined parking direction.

For example, the driver's gaze range in the reverse parking direction is described. Even while the vehicle 100 travels in the straight direction, the driver focuses attention on the intended parking space. Therefore, all expected attention focus ranges (①-R, ②-R, and ③-R) while traveling in the straight direction (①, ②, and ③) correspond to the intended parking space to the right of the vehicle.

At this point, on the basis of images collected by the first sensor and the location of the vehicle, it may be recognized that the parking direction of the vehicle is the reverse parking direction. In this case, expected attention focus ranges (④-1R and ④-2R) may be further expanded up to the rearview mirror region.

Although not illustrated, in other parking directions (for example, in the straight-line parking direction), similar to the parking process described above, the attention focus region may be expanded, and the sensitivity level for the driver's gaze dispersion may be adjusted.

When parking is complete, the changed determination reference, that is, the expanded attention focus region and the reduced sensitivity level for the driver's gaze dispersion are restored to their original values, respectively.

In this manner, according to the present disclosure, the driver's expected attention focus range may be ascertained based on the recognition of the parking space and the recognition of the parking direction relative to the current location of the vehicle. Accordingly, frequent DMS alarms can be avoided by changing the attention focus region and reducing the sensitivity level for the driver's gaze dispersion.

As described above, according to one or several embodiments of the present disclosure, various surrounding situations of the vehicle that change in real time during vehicle travel are monitored, and the attention focus region or the sensitivity level for the driver's gaze dispersion for determining the driver's state are adjusted adaptively. Thus, the driver's gaze that shifts as needed during vehicle travel and the driver's gaze dispersion that occurs due to inattentiveness during vehicle travel can be distinguished. Accordingly, the driver's state can be ascertained more accurately, and thus the DMS alert can be provided. In addition, even in a case where the vehicle maintains a sufficient distance from an object in the travel lane and an attentiveness alarm is not triggered in the vehicle, for example, the movement of an object that travels beside a slow lane or is likely to cause a collision at a crossroad may be monitored. In such cases, the DMS can perform monitoring in a manner adaptive to an external situation by varying the attention focus region and/or adjusting the sensitivity level for the driver's gaze dispersion. In addition, in a case where the driver's visual distance is shortened due to weather conditions or the surrounding situation of the travel lane, in order to ensure safe driving, the sensitivity level for the driver's gaze dispersion can be raised for the purpose of adjustment. In an abrupt glaring situation, such as after exiting a long tunnel or when an oncoming vehicle's high beams are activated, the sensitivity level for the driver's gaze dispersion can be temporarily lowered for the purpose of adjustment. Accordingly, the DMS can perform smart monitoring while considering safe conditions and abrupt changes in situations. In addition, in a case where traveling situations are currently not changed and where changes in the traveling situations are sufficiently predicted by recognizing changes in nearby travel lanes, surrounding space, and similar factors, the DMS can perform monitoring by quickly adjusting the sensitivity level for the driver's gaze dispersion or expanding the attention focus region. Accordingly, the need for frequent warnings to the driver can be eliminated, reducing inconvenience.

The present disclosure can be embodied as computer-readable codes (applications or software modules) on a program-recorded medium. The method of controlling an autonomous vehicle can be implemented with codes stored in memory or similar storage.

Examples of computer-readable media include all types of recording devices capable of storing data readable by a computer system. Furthermore, examples of the computer-readable medium include a hard disk drive (HDD), a solid-state disk (SSD), a silicon disk drive (SDD), a ROM, a RAM, a CD-ROM, a magnetic tape, a floppy disk, an optical data storage device, and the like. The computer-readable medium may also be realized in the form of a carrier wave (such as for transmission over the Internet). In addition, the computer may also include a process or a control unit. Therefore, the description detailed above should be regarded as exemplary without being interpreted in a limited manner in all aspects. The scope of the present disclosure should be determined by the proper construction of the following claims. All equivalent modifications to the embodiments of the present disclosure fall within the scope of the present disclosure.

## Claims

1. A driver monitoring apparatus comprising:
a reception unit that receives surrounding environment information from a first sensor mounted on the exterior of a vehicle, which monitors the surrounding environment of the vehicle;
a second sensor mounted inside the vehicle, which detects a driver's face and gaze direction during vehicle travel; and
a processor that monitors the driver's gaze dispersion partially occurring within an attention focus region using the second sensor, determines whether or not to change the attention focus region based on the received surrounding environment information, and recognizes the driver's state corresponding to the extent of the driver's gaze dispersion, which is detected by the second sensor, based on the determination,
wherein the processor adjusts the sensitivity level for the driver's gaze dispersion partially occurring within the attention focus region on the basis of the surrounding environment information monitored by the first sensor and the sensing result from the second sensor.

2. The driver monitoring apparatus of claim 1, wherein the first sensor is an ADAS camera mounted on the front side of the exterior of the vehicle, and the second sensor is a DMS camera mounted on the front side of the interior of the vehicle.

3. The driver monitoring apparatus of claim 1, wherein the processor changes the sensitivity level for the driver's gaze dispersion based on the surrounding environment information monitored by the first sensor, and then, in response to the recognition that the cause of the change in the sensitivity level no longer exists, restores the attention focus region and the sensitivity level for the driver's gaze dispersion to the initial values thereof, respectively.

4. The driver monitoring apparatus of claim 1, wherein the surrounding environment information acquired from the first sensor indicates that a slowly travelling object is present beside the vehicle, and the processor is configured to change the attention focus region in such a manner as to include a region associated with the direction in which the slowly traveling object is present and then monitor the driver's state.

5. The driver monitoring apparatus of claim 4, wherein, while the slowly traveling object beside the vehicle is detected, the processor reduces the sensitivity level for the driver's gaze dispersion to the changed attention focus region.

6. The driver monitoring apparatus of claim 1, wherein the surrounding environment information acquired from the first sensor indicates that an object likely to cause a collision is present in the vicinity of the vehicle, and the processor is configured to reduce the sensitivity level for the driver's gaze dispersion while the object likely to cause a collision is detected.

7. The driver monitoring apparatus of claim 6, wherein, according to the result of an image acquired by the second sensor, the processor monitors the driver's state based on the reduced sensitivity level of the gaze dispersion while the driver's gaze direction aligns with the direction in which the object likely to cause a collision is present.

8. The driver monitoring apparatus of claim 1, wherein the processor receives visible distance information as the surrounding environment information, the visible distance information being estimated on the basis of an image of the roadway ahead of the vehicle, which is acquired by the first sensor, and adjusts the sensitivity level for the driver's gaze dispersion based on the visible distance information.

9. The driver monitoring apparatus of claim 1, wherein the processor receives as the surrounding environment information a change in a tracking path of a lane in the travel direction of the vehicle, the change being acquired by the first sensor, and, when the turning of the vehicle is predicted based on the detection of the change in the tracking path, reduces the sensitivity level for the driver's gaze dispersion.

10. The driver monitoring apparatus of claim 9, wherein the processor adds to the attention focus region a region associated with a direction corresponding to the detected change in the tracking path of the lane and monitors the driver's gaze dispersion through the second sensor.

11. The driver monitoring apparatus of claim 10, wherein the region associated with the direction corresponding to the change in the tracking path aligns with a gaze direction corresponding to the change in the tracking path, and the processor expands the attention focus region toward the gaze direction corresponding to the change in the tracking path.

12. The driver monitoring apparatus of claim 1, wherein the processor reduces the sensitivity level for the driver's gaze dispersion for a predetermined time based on the detection of a brightness change in an image acquired by the second sensor, the brightness change reaching or exceeding a reference value.

13. The driver monitoring apparatus of claim 1, wherein the processor recognizes the detection of a parking space by the first sensor as the surrounding environment information, and, while the vehicle parks in the recognized parking space, reduces the sensitivity level for the driver's gaze dispersion.

14. The driver monitoring apparatus of claim 13, wherein the processor determines the parking direction of the vehicle based on data collected by the first sensor in the recognized parking space and expands the attention focus region toward a gaze direction corresponding to the determined parking direction.

15. A method of operating a driver monitoring apparatus, the method comprising:
a step of receiving surrounding environment information of a vehicle that travels, using a first sensor mounted on the exterior of the vehicle:
a step of determining whether or not to change an attention focus region based on the received surrounding environment information and adjusting the sensitivity level of a driver's gaze dispersion partially occurring within the determined attention focus region;
a step of monitoring the extent of the driver's gaze dispersion based on the adjusted sensitivity level for the driver's gaze dispersion partially occurring within the determined attention focus region using the received surrounding environment information and the second sensor mounted inside the vehicle; and
a step of determining whether or not attentive driving is necessary depending on the driver's state corresponding to the extent of the driver's gaze dispersion and outputting an alert.
